# EUROPÄISCHE PATENTSCHRIFT

(11) **EP 3 251 192 B1**
(45) Veröffentlichungstag und Bekanntmachung des Hinweises auf die Patenterteilung: **01.07.2020**
(21) Anmeldenummer: 16705713.2
(22) Anmeldetag: 01.02.2016
(51) Int. Cl.: B60L 53/16

(54) **LADEVORRICHTUNG UND VERFAHREN ZUM LADEN**
CHARGER DEVICE AND METHOD FOR CHARGING
DISPOSITIF DE CHARGE ET PROCÉDÉ DE CHARGE

(30) Priorität: 30.01.2015 AT 500762015
(43) Veröffentlichungstag der Anmeldung: 06.12.2017
(60) Teilanmeldung: 20160356.0
(73) Patentinhaber: Flechl, Christian, 8010 Graz (AT)
(72) Erfinder: Flechl, Christian, 8010 Graz (AT)
(74) Vertreter: Wirnsberger & Lerchbaum Patentanwälte OG
(86) Internationale Anmeldenummer: PCT/AT2016/050020
(87) Internationale Veröffentlichungsnummer: WO 2016/119000

(56) Entgegenhaltungen:
- CN-A- 102 035 093
- FR-A1- 3 000 029
- KR-A- 20110 077 444
- US-A- 5 409 403
- US-A1- 2014 120 746

## Beschreibung

Die Erfindung betrifft eine Ladevorrichtung, insbesondere für ein Fahrzeug.

Darüber hinaus betrifft die Erfindung eine Verwendung einer solchen Ladevorrichtung.

Weiter betrifft die Erfindung ein Elektrofahrzeug mit einer solchen Ladevorrichtung.

Ferner betrifft die Erfindung ein Verfahren zum Laden, insbesondere eines Fahrzeuges, insbesondere unter Verwendung einer solchen Ladevorrichtung.

Seit mehreren Jahren werden Elektrofahrzeuge bzw. Plug-in-Hybridfahrzeuge, insbesondere zumindest teilweise elektrisch angetriebene Pkws, serienmäßig von verschiedenen Fahrzeugherstellern produziert bzw. verkauft.

Eine Mehrzahl von aus dem Stand der Technik bekannten Elektrofahrzeugen bzw. Plug-in-Hybridfahrzeugen ist konduktiv über ein an einem Kabel zur Strom- bzw. Spannungsübertragung angeordnetes Verbindungselement ladbar, welches mit einem am Fahrzeug angeordneten weiteren Verbindungselement unter Herstellung einer leitenden Verbindung zusammenführbar ist. Kabelgebundenes Laden hat den Vorteil, dass dieses mit einem entsprechend ausgebildeten Kabel quasi verlustfrei durchführbar eine hohe Ladeleistung möglich ist. Weiter ist ein kabelgebundenes Laden eines Elektrofahrzeuges aufgrund von relativ günstig produzierbaren Kabeln und Steckern bzw. Verbindungselementen mit eher geringen Kosten verbunden.

Unterschiedliche Fahrzeughersteller ordnen eine Buchse bzw. ein Verbindungselement zum Verbinden mit dem am Kabel angeordneten Verbindungselement oftmals an unterschiedlichen Positionen am Fahrzeug an. Beispielsweise kann dieses seitlich, vorne oder hinten am bzw. im Fahrzeug integriert sein. Soll ein Elektrofahrzeug aufgeladen werden, muss dieses folglich jeweils anders zum Kabel bzw. an diesem angeordneten Verbindungselement positioniert bzw. geparkt werden bzw. muss ein Kabel entsprechend lang ausgebildet sein, um eine Verbindung zum Laden des Fahrzeuges herzustellen. Eine vorgegebene Positionierung des Elektrofahrzeuges ist relativ unkomfortabel und ein langes Kabel steigert dessen Kosten. Weiter erfolgt ein Verbinden der beiden Verbindungselemente meist händisch, was wiederum aufwendig ist. Es kann ferner durchaus vorkommen, dass auf das Verbinden vergessen und somit das Elektrofahrzeug nicht aufgeladen wird und folglich nicht in Betrieb nehmbar ist. Darüber hinaus verursacht ein langes Kabel, welches lose herumliegt, mehrere Probleme: Dieses wird schnell schmutzig, kann eine Stolperfalle darstellen, kann sich verheddern und Ziel von Vandalismus werden.

Um diese Nachteile zu überwinden, wird seit einiger Zeit an einer serienmäßig produzierbaren induktiven Ladevorrichtung geforscht. Induktives Laden ist gegenüber kabelgebundenem Laden komfortabler, da kein händisches Ein- und Ausstecken mehr notwendig ist und das induktive Laden vollautomatisiert erfolgt. Dies erfordert jedoch ein sehr exaktes Positionieren einer im Fahrzeugboden angeordneten Sekundärspule über einer im Boden eines Parkplatzes angeordneten Primärspule. Derzeit ist mit einer induktiven Ladevorrichtung nur eine Ladeleistung von etwa 3 kW bis 4 kW möglich, wobei ein Wirkungsgrad auch gering ist. Darüber hinaus ist die notwendige Elektronik teuer und aufwendig in deren Herstellung und zudem hat der gesamte Teil einer am Fahrzeug befestigten Ladevorrichtung ein hohes Eigengewicht. Ein weiterer Nachteil beim induktiven Laden ist die elektromagnetische Verträglichkeit und die damit verbundenen notwendigen Schirmungs- und/oder Filtermaßnahmen, welche kostenintensiv sind. Des Weiteren haben elektromagnetische Felder bzw. eine elektromagnetische Energieübertragung eine geringe Akzeptanz in der Gesellschaft, weshalb ein Verkauf eines Elektrofahrzeuges mit einer induktiven Ladevorrichtung auch im Fall von geringeren Herstellungskosten schwierig sein könnte.

Aus dem Stand der Technik sind somit zwar Vorrichtungen zum Laden eines Fahrzeuges mit punktuellen Vorteilen bekannt, diese weisen jedoch alle mehrere Nachteile auf. Als Stand der Technik werden dabei insbesondere folgende Schriften angesehen: KR 2011 0077444 A, CN 102 035 093 A, US 5 409 403 A.

Hier setzt die Erfindung an. Aufgabe der Erfindung ist es, eine Ladevorrichtung der eingangs genannten Art anzugeben, welche ein komfortables und automatisiertes Laden eines Fahrzeuges mit einer hohen Ladeleistung ermöglicht.

Ein weiteres Ziel ist es, eine Verwendung einer solchen Ladevorrichtung anzugeben.

Ferner ist es Ziel, ein Elektrofahrzeug der eingangs genannten Art anzugeben, welches komfortabel und automatisiert mit einer hohen Ladeleistung ladbar ist.

Weiter ist es Ziel, ein Verfahren der eingangs genannten Art anzugeben, mit welchem Energie komfortabel und automatisiert ausgetauscht wird.

Die Aufgabe wird erfindungsgemäß durch die Merkmale des Vorrichtungsanspruchs 1 bzw. des Verfahrensanspruchs 10 gelöst.

Ein mit der Erfindung erzielter Vorteil ist insbesondere darin zu sehen, dass durch das Zusammenführen des Verbindungselementes mit der Kontaktierungsplatte ein bequemes Laden beispielsweise eines Fahrzeuges bzw. einer in diesem angeordneten Speichereinheit für elektrische Energie ermöglicht ist. Die Kontaktierungsplatte ist dazu so ausgebildet, dass diese an oder in einem Fahrzeug befestigbar ist. Alternativ kann die Kontaktierungsplatte auch stationär bei einer Ladestation befestigbar sein. Erfindungsgemäß kann vorgesehen sein, dass sowohl das Zusammenführen als auch das Einrasten selbsttätig erfolgt. Folglich ist im Vergleich zum Stand der Technik kein umständliches händisches Mitwirken beim Herstellen einer Verbindung zwischen einer Stromversorgung und beispielsweise einem Fahrzeug mehr notwendig. Durch die Vielzahl von Positionierelementen und das selbsttätige sowie positionsunabhängige Einrasten des Verbindungselementes ist zudem keine exakte Positionierung eines Fahrzeuges, an oder im welchem die Kontaktierungsplatte befestigbar ist, mehr notwendig. Insbesondere beim Vergleich mit dem induktiven Laden eines Elektrofahrzeuges bzw. Plug-in-Hybridfahrzeuges ergibt sich dadurch ein großer Vorteil, da ein Wirkungsgrad beim induktiven Laden mit zunehmendem Versatz der Spulen deutlich abnimmt. Bevorzugt ist die Kontaktierungsplatte mit den Positionierelementen dabei so ausgebildet, dass beim Anstehen des Verbindungselementes an dieser dasselbe unabhängig von einer Position des Anstellens in eines der Positionierelemente einrastet, bevorzugt formschlüssig. Mit einer erfindungsgemäßen Ladevorrichtung ist einerseits eine Speichereinheit für Energie in einem Fahrzeug aufladbar und andererseits ist elektrische Energie aus einer Speichereinheit in ein Stromnetz rückführbar. Es ist also ein bidirektionaler Energieaustausch zwischen zwei Energiesystemen möglich.

Erfindungsgemäss ist vorgesehen, dass die Kontaktierungsplatte mehrschichtig aufgebaut ist, wobei in einem Durchschnitt durch diese abwechselnd zumindest eine Isolierschicht und zumindest eine Kontaktschicht vorgesehen sind. Die Isolierschicht kann dabei beispielsweise aus Kunststoff wie Polyester, insbesondere Polyactid (PLA), ausgebildet sein. PLA kann eine Durchschlagsfestigkeit von bis zu etwa 20000 V/mm aufweisen, wodurch die Isolierschicht relativ dünn ausgebildet sein kann, wohingegen die Kontaktschicht zur Herstellung eines elektrischen Kontaktes bzw. zur Übertragung von elektrischer Energie leitend ausgebildet ist. Mit Vorteil kann die Isolierschicht auch aus Polyvinylchlorid (PVC), Polyethylenterephthalat (PET) oder Acrylnitril-Butadien-Styrol (ABS) ausgebildet sein. Insgesamt kann die Kontaktierungsplatte möglichst dünn ausgebildet sein, um ein Eigengewicht dieser zu minimieren. Vorteilhaft ist jedoch, wenn die Isolierschicht dicker ausgebildet ist als die Durchschlagsfestigkeit des diese bildenden Materials, beispielsweise etwa 20-mal so dick.

Vorteilhaft ist es, wenn die Kontaktierungsplatte eine Vielzahl von, in einer Draufsicht bevorzugt mehreckigen, insbesondere hexagonalen, Zellen mit jeweils einem Positionierelement umfasst. Die Zellen sind dabei regelmäßig auf der Kontaktierungsplatte angeordnet und schließen somit eine gesamte Fläche dieser ein. Es kann vorgesehen sein, dass ein Durchmesser einer Zelle etwa 40 mm bis 120 mm, beispielsweise etwa 70 mm, ist.

Es kann auch vorgesehen sein, dass die Kontaktierungsplatte länglich ausgebildet ist und somit nur eine Reihe von Zellen aufweist, wobei jede Zelle ein Positionierelement umfasst. Hierbei ist eine zweidimensionale Bewegung des Verbindungselementes erforderlich, um dieses mit einem Positionierelement zusammenzuführen. Eine solche Kontaktierungsplatte beansprucht nur einen geringen Platz an beispielsweise einer Unterseite eines Elektrofahrzeuges, wo diese z. B. quer am Fahrzeugboden angeordnet ist. Bei einer Zusammenführung des beispielsweise unterhalb des Elektrofahrzeuges angeordneten Verbindungselementes mit einem Positionierelement ist in diesem Fall neben einer Aufwärtsbewegung eine Längsbewegung des Verbindungselementes notwendig.

Eine weitere Variante einer Ladevorrichtung ist gekennzeichnet durch eine Kontaktierungsplatte, welche nur ein einziges Positionierelement bzw. eine einzige Zelle umfasst. Hierbei ist dann eine genauere Positionierung des Verbindungselementes notwendig, wobei ein Toleranzbereich einer Zellengröße entspricht.

Dabei kann bevorzugt vorgesehen sein, dass jede Zelle insbesondere konusförmige Ausnehmungen mit einer Spitze in einem Mittelpunkt der Zelle aufweist. Die Ausnehmungen umfassen dabei bevorzugt eine gesamte Höhe bzw. Dicke der Kontaktierungsplatte, welche beispielsweise etwa 10 mm bis 30 mm dick sein kann. Jede Zelle mit der konusförmigen Ausnehmung stellt dabei ein Positionierelement dar. Ein Winkel der Ausnehmungen kann mit Vorteil eine gewisse Mindeststeilheit aufweisen, etwa in einem Bereich von 15° bis 35°, insbesondere in einem Bereich von 20° bis 30°, bevorzugt etwa 25°.

Zweckmäßigerweise umfasst jede konusförmige Ausnehmung zumindest eine hohlzylindrische, koaxiale Aussparung. Erfindungsgemäß können beispielsweise eine, drei oder fünf Aussparungen oder mehr vorgesehen sein. Sind mehrere Aussparungen vorgesehen, ist es von Vorteil, wenn diese unterschiedlich tief ausgebildet sind, wobei eine Aussparung, welche am weitesten innen bzw. am nächsten zur Spitze der konusförmigen Ausnehmung angeordnet ist, eine relativ größte Tiefe aufweisen kann bzw. weitesten in Richtung unteres Ende der Kontaktierungsplatte reichen kann.

Dazu ist es weiter von Vorteil, wenn in der zumindest einen koaxialen Aussparung die zumindest eine Kontaktschicht angeordnet ist. Erfindungsgemäß kann dabei vorgesehen sein, dass die gesamte Kontaktierungsplatte aus einem elektrisch nicht leitenden bzw. isolierenden Material ausgebildet ist, welches die Isolierschicht darstellt. In der zumindest einen Aussparung kann dann die zumindest eine Kontaktschicht bzw. elektrisch leitende Schicht angeordnet sein. Falls eine dreiphasige Verbindung zur Übertragung von Wechselspannung bzw. Wechselstrom bzw. Drehstrom zwischen der Kontaktierungsplatte bzw. einem Positionierelement und dem Verbindungselement hergestellt werden soll, kann vorteilhaft vorgesehen sein, dass in jeder Zelle bzw. in jedem Positionierelement drei koaxiale Aussparungen angeordnet sind. Dabei ist in jeder Aussparung jeweils eine Kontaktschicht ringförmig bzw. ebenfalls koaxial angeordnet. Durch die ringförmige Ausbildung der zumindest einen Kontaktschicht kann diese dünn ausgebildet sein, beispielsweise dünner als 2 mm, insbesondere etwa 1 mm, und trotzdem eine große Querschnittsfläche aufweisen, da eine Umfangslänge der Kontaktschicht um zumindest eine Größenordnung größer ist als deren Dicke. Durch die große Querschnittsfläche ist eine große Ladeleistung erreichbar, wodurch eine Ladedauer herabsetzbar ist.

Es kann auch vorgesehen sein, dass bei einer dreiphasigen Verbindung neben den drei Aussparungen mit jeweils einer Kontaktschicht zwei weitere Aussparungen für einen Schutzleiter und einen Neutralleiter und zusätzlich eine bzw. zwei weitere Aussparungen vorgesehen sind. In diesen sind zweckmäßigerweise Signalleitungen bzw. Signalkontakte für eine Kommunikation zwischen beispielsweise einem Elektrofahrzeug und einer Ladestation angeordnet. Besonders günstig ist es, wenn nur eine zusätzliche Aussparung für z. B. zwei Signalkontakte vorgesehen ist, welche weiter unterteilt ist bzw. in welcher zwei Signalkontakte z. B. übereinander mit einer Isolierung dazwischen angeordnet sind, um die zwei Signalkontakte voneinander abzutrennen. Beim Zusammenschluss eines Positionierelementes mit dem Verbindungselement sind die Signalkontakte konduktiv miteinander verbunden. Über die Signalkontakte wird wenig bis annährend keine Energie übertragen, weshalb diese entsprechend dünn bzw. dünner als die Kontaktschichten zur Strom- bzw. Spannungsübertragung ausgebildet sind.

Bei einer dreiphasigen Verbindung bzw. Energieübertragung, umfassend vorzugsweise drei Außenleiter, einen Neutralleiter, einen Schutzleiter und zwei Steuer- bzw. Signalkontakte, ist der Ladeanschluss des Elektrofahrzeuges mit Vorteil für entsprechende Leitungen mit einem Batteriemanagementsystem wie beispielsweise einem sogenannten On-Board-Charger im Elektrofahrzeug verbunden. Entsprechende Kontaktschichten der Kontaktierungsplatte sind parallel mit diesen Leitungen verbunden. Erfolgt nun eine Ladung über die Kontaktierungsplatte, ist es notwendig, die Signalkontakte zwischen einem Elektrofahrzeugladeanschluss und der parallelen Abzweigung zur Kontaktierungsplatte zu unterbrechen, um ein gleichzeitiges Laden über die Kontaktierungsplatte sowie dem normalen Elektrofahrzeugladeanschluss zu verhindern, da es sonst zu einem Kurzschluss kommt.

Des Weiteren ist es zweckmäßig, wenn die Kontaktschichten der Kontaktierungsplatte, welche den drei Außenleitern sowie dem Neutralleiter entsprechen, stets durch beispielsweise ein Relais oder einen Halbleiterschalter (z. B. Thyristor oder Triac) elektrisch vom Elektrofahrzeug getrennt sind, sofern nicht gerade über die Kontaktierungsplatte geladen wird. Sobald ein Ladevorgang über die Kontaktierungsplatte beginnt und diese somit bereits bestromt ist, ist die Spannung zwischen den Kontaktschichten (z. B. zwischen einem Außenleiter und dem Neutralleiter) zum Schalten des Relais bzw. Halbleiterschalter verwendbar.

Erfolgt eine kabelgebundene Ladung eines Elektrofahrzeuges, ist es notwendig, eine gleichzeitige automatische Ladung über die Kontaktierungsplatte zu verhindern. Dies erfolgt beispielsweise durch eine Unterbrechung von entsprechenden Signalleitungen oder eine entsprechende Elektronik, welche ein gleichzeitiges Laden über die Kontaktierungsplatte verhindert.

Bei einer einphasigen Verbindung ist in jeder Zelle bzw. in jedem Positionierelement eine koaxiale Aussparung bzw. eine zweite Aussparung für einen Nullleiter angeordnet. Darüber hinaus sind zusätzlich eine bzw. zwei weitere Aussparungen für Signalleitungen vorgesehen. Hierbei ist es jedoch zweckmäßig, wenn das dadurch hergestellte Drehstromnetz nicht unsymmetrisch belastet wird, da dieses in einem solchen Fall nur bis zu einer bestimmten Leistung belastbar ist. Bei einem solchen einphasigen Aufbau sind die Kontaktschichten mit Vorteil groß dimensioniert, sodass hohe Ströme fließen können bzw. übertragbar sind. Des Weiteren sind die zwei Strom führenden Kontakte bei einer Gleichstromladung als Plus- bzw. Minuspol verwendbar.

Die Kontaktschichten bzw. die elektrisch leitenden Schichten können dabei zwischen den einzelnen Positionierelementen miteinander verbunden sein, bevorzugt über die bzw. in der gesamten Kontaktierungsplatte. Beim dreiphasigen Fall heißt das, dass sich die Kontaktschicht für die jeweils gleiche Phase über die gesamte Kontaktierungsplatte und somit jeweils von einem Positionierelement zum nächsten erstreckt. Es ist folglich pro Leiter eine Kontaktschicht vorgesehen. Um dabei zu erreichen, dass eine Querschnittsfläche jeder Kontaktschicht gleich groß ist, können die Kontaktschichten umso dicker werden je weiter innen in Richtung Konusspitze diese angeordnet sind.

Zwischen jeder Kontaktschicht ist dabei weiter jeweils eine Isolierschicht angeordnet, welche sich ebenfalls über die gesamte Kontaktierungsplatte erstreckt, wobei jeweils eine Isolierschicht die Kontaktierungsplatte nach unten und nach oben abschließt. Beim dreiphasigen Fall sind also vier Isolierschichten vorgesehen. Ferner ist es günstig, wenn die Kontaktschichten jeweils mit einer geringeren Höhe als die Isolierschichten ausgebildet sind bzw. nicht ganz zu einem oberen Ende der Isolierschichten reichen, um unerwünschte Überschläge und Kontakte zu vermeiden. Die Kontaktschichten und Isolierschichten werden bevorzugt durch einen einmaligen hohen Krafteinsatz unlösbar miteinander verbunden. Eine solche Verbindung kann z. B. durch Pressen, Kleben oder Verschrauben hergestellt werden. Von Vorteil ist dabei, dass die einzelnen Schichten schichtartig bzw. sandwichartig ohne Hinterschneidungen miteinander verbindbar sind und die Kontaktierungsplatte somit kostengünstig herstellbar ist.

Neben einer dreiphasigen Verbindung kann die Ladevorrichtung auch für eine fünfphasige Verbindung zur Übertragung von Wechselspannung zwischen Kontaktierungsplatte bzw. einem Positionierelement und einem Verbindungselement entsprechend ausgebildet sein. Dazu sind fünf koaxiale Aussparungen in jeder Zelle vorgesehen, wobei wiederum in jeder Aussparung eine Kontaktschicht angeordnet ist. Ein schichtartiger Aufbau der Kontaktierungsplatte erfolgt dabei entsprechend dem dreiphasigen Fall.

Zur Übertragung von elektrischer Energie von der Kontaktierungsplatte zu einer Speichereinheit kann über eine gesamte Länge bzw. Breite der Kontaktierungsplatte am Rand von einer oder zwei Seiten derselben ein Energiekabel pro leitende Kontaktschicht an diese anschließen. Die Energiekabel sind mit Vorteil so an der Kontaktierungsplatte befestigt, dass eine punktförmige hohe Strombelastung vermieden wird.

Es kann vorgesehen sein, dass die Kontaktierungsplatte an einem Elektrofahrzeug angeordnet ist, insbesondere etwa mittig bodenseitig, um ein möglichst flexibles Positionieren des Elektrofahrzeuges zu ermöglichen. Bevorzugt kann dabei vorgesehen sein, dass die Kontaktierungsplatte mindestens 40 cm mal 25 cm, beispielsweise etwa 80 cm mal 60 cm, groß ist. Alternativ dazu kann diese als Reihe ausgebildet sein, wobei eine Länge derselben etwa 40 cm und eine Breite einer Zellenbreite entsprechen kann. Günstig ist es jedenfalls, wenn diese so groß ausgebildet ist, dass das Elektrofahrzeug beliebig auf einem Parkplatz positionierbar ist. Zugleich sollte diese klein genug ausgebildet sein, um ein selbsttätiges Einrasten eines Verbindungselementes zu ermöglichen und ein Gewicht des Elektrofahrzeuges nicht unnötigerweise zu vergrößern. Es kann auch vorgesehen sein, dass die Kontaktierungsplatte bodenseitig an einem Plug-in-Hybridfahrzeug angeordnet ist. Weiter kann die Kontaktierungsplatte z. B. auch neben einer vorderen oder hinteren Nummerntafel eines Fahrzeuges angebracht oder innerhalb eines Fahrzeuges verbaut sein.

Die Kontaktierungsplatte kann auch durch eine einzige Zelle gekennzeichnet sein, wobei deren Abmessungen etwa den Abmessungen der einzigen Zelle entsprechen.

Dabei kann es weiter günstig sein, wenn eine Abdeckeinrichtung vorgesehen ist, welche die Kontaktierungsplatte bei Nichtgebrauch abdeckt. Nichtgebrauch ist immer dann gegeben, wenn eine Ladevorrichtung eines Fahrzeuges nicht aufgeladen wird bzw. die Kontaktierungsplatte nicht mit einem Verbindungselement verbunden ist. Die Abdeckeinrichtung kann bevorzugt faltbar ausgebildet sein und schützt beispielsweise vor Verschmutzungen und/oder Nässe. Bevorzugt erfolgt ein Öffnen bzw. Schließen der Abdeckeinrichtung automatisiert, wobei diese beispielsweise mit Magneten in Position gehalten ist. Denkbar ist auch, dass eine Feder vorgesehen ist, um die Abdeckeinrichtung von einer ersten in eine zweite Position zu bringen. Günstig kann es auch sein, wenn die Abdeckeinrichtung auch in einem verbundenen Zustand einen Bereich der Kontaktierungsplatte abdeckt, welcher nicht mit dem Verbindungselement verbunden ist.

Günstig ist es, wenn die Abdeckeinrichtung lamellenartig ausgebildet ist, wobei einzelne Lamellen lösbar miteinander verbunden sind. Innerhalb einer, zwei, drei oder mehr Lamellen ist bevorzugt ein ferromagnetisches Material angeordnet, wobei dieses sich mit beispielsweise drei Längsrippen nach außen erstreckt und bevorzugt über eine gesamte Länge einer Lamelle angeordnet ist. Besonders bevorzugt ist das ferromagnetische Material etwa mittig einer jeweiligen Lamelle angeordnet und umfasst etwa 50 % deren Breite. Ein beidseitiger äußerer Rand der jeweiligen Lamelle ist aus einem nicht ferromagnetischen Material ausgebildet, beispielsweise einem Kunststoff oder einem nicht ferromagnetischen Metall. Die lamellenartige Abdeckeinrichtung, bei welcher mehrere Lamellen nebeneinander angeordnet sind, ist somit jeweils abwechselnd mit ferromagnetischen und nicht ferromagnetischen Bereichen ausgebildet, wobei beide etwa dieselbe Breite umfassen.

Um ein vollständig automatisiertes Laden zu ermöglichen, kann weiter vorgesehen sein, dass das Verbindungselement in jedem der Positionierelemente positionierbar ist, wobei das Verbindungselement insbesondere konisch mit einer stumpfen Spitze ausgebildet ist. Dadurch ist sichergestellt, dass das Verbindungselement formschlüssig in jedes einzelne der Positionierelemente der Kontaktierungsplatte positionierbar ist. Die stumpfe Spitze bzw. das stumpfe Ende ermöglicht dabei ein selbsttätiges sowie nachgiebiges Einrasten des Verbindungselementes in eines der Positionierelemente. Es ist bei einer solchen Ausbildung kein großer Widerstand zu überwinden. Insbesondere bei einem Auftreffen des Verbindungselementes auf der Kontaktierungsplatte in einer Position zwischen zwei Positionierelementen ist durch die Ausformung des Verbindungselementes ein automatisiertes Einrasten in eine der gewünschten Positionen ermöglicht. Besonders bevorzugt weist das Ende des Verbindungselementes eine halbkugelförmige Abrundung mit einem Radius kleiner als 5 mm, insbesondere 1 mm oder kleiner auf. Bei einer Materialwahl des Verbindungselementes sollte insbesondere darauf geachtet werden, dass dieses eine erforderliche Härte aufweist, um einen möglichen Materialabrieb und zu überwindende Reibungskräfte beim Zusammenführen zu minimieren. Dazu kann eine Oberfläche des Verbindungselementes beschichtet sein, z. B. mit Polytetrafluorethylen (PTFE), wobei es dabei günstig ist, wenn auch eine Oberfläche der Positionierelemente mit PTFE beschichtet ist, um einen Reibwert beim Zusammenführen zu minimieren.

Erfindungsgemäß kann weiter vorgesehen sein, dass der Konus bzw. Kegel des Verbindungselementes einen Winkel bzw. eine konusförmige Reduzierung im Bereich von 50° bis 80° aufweist, insbesondere im Bereich von 55° bis 75°, bevorzugt etwa 65°. Dadurch rutscht dieser beim Zusammenführen bzw. Anstehen an der Kontaktierungsplatte besonders gut in eines der Positionierelemente und es muss wenig Reibungswiderstand überwunden werden.

Erfindungsgemäss ist vorgesehen, dass innerhalb des Verbindungselementes zumindest ein Kontaktkörper angeordnet ist, welcher bei Krafteinwirkung teilweise aus dem Verbindungselement bringbar ist, um sich mit der Kontaktschicht eines Positionierelementes zu verbinden, wobei ein Kontaktbereich in der Kontaktierungsplatte angeordnet ist. Insbesondere kann dabei vorgesehen sein, dass mehrere Kontaktkörper im Verbindungselement angeordnet sind, welche bevorzugt entsprechend der in den koaxialen Aussparungen der Kontaktierungsplatte angeordneten Kontaktschichten koaxial zueinander angeordnet sind. Abhängig davon, ob zur Übertragung von Wechselspannung eine dreiphasige oder fünfphasige Verbindung hergestellt werden soll, können entsprechend drei oder fünf hohlzylindrische bzw. ringförmige Kontaktkörper vorgesehen sein. Dabei kann weiter vorgesehen sein, dass jeder koaxiale Kontaktkörper jeweils aus mehreren, z. B. drei, sechs oder acht, Teilstücken bzw. Segmenten besteht. Durch die hohlzylindrische Ausbildung des zumindest einen Kontaktkörpers kann dieser wiederum dünn ausgebildet sein, beispielsweise dünner als 2 mm, insbesondere etwa 1 mm, und trotzdem eine große Querschnittsfläche aufweisen, da eine Länge bzw. ein Umfang des Kontaktkörpers um zumindest eine Größenordnung größer ist als dessen Dicke. Durch die große Querschnittsfläche ist eine große Ladeleistung erreichbar, wodurch eine Ladedauer herabsetzbar ist.

Erfindungsgemäß kann auch eine Übertragung von Gleichstrom vorgesehen sein. Dazu können zwei Verbindungselemente vorgesehen sein, in welchen jeweils ein Kontaktkörper mit jeweils einer Phase angeordnet ist. Die Positionierelemente können zur Aufnahme der Verbindungselemente paarweise ausgebildet sein und entsprechend jeweils eine Kontaktschicht mit einer Phase umfassen.

Günstig ist es, wenn die Kontaktkörper stets innerhalb des Verbindungselementes angeordnet sind und erst nach einer formschlüssigen Aufnahme des Verbindungselementes von einem Positionierelement teilweise aus diesem herausdrückbar sind, um ein Verbiegen und/oder Berühren der Kontaktkörper oder dergleichen zu verhindern. Bei einer Position teilweise außerhalb des Verbindungselementes bzw. einer Position, bei welcher sich eine Form des Verbindungselementes ändert, sind die Segmente in Richtung des Konus des Verbindungselementes jeweils in allen Richtungen von diesem begrenzt, wobei der Konus bevorzugt aus einem elektrisch nicht leitendem Material bzw. Isoliermaterial gefertigt ist. Die Kontaktkörper können also äußerlich bis auf einen für einen elektrischen Kontakt erforderlichen Bereich elektrisch isoliert sein. Zweckmäßig ist, wenn an einer der Spitze des Konus gegenüberliegenden Seite ein Druckmittel vorgesehen ist, mit welchem die Kontaktkörper durch Krafteinwirkung aus dem Konus des Verbindungselementes bringbar sind, wobei die Kontaktkörper bevorzugt in dieser Position außerhalb des Verbindungsmittels lösbar fixierbar sind. Dabei kann vorgesehen sein, dass diese durch eine neuerliche Betätigung des Druckmittels aus dieser Position lösbar und wieder in deren Ausgangsposition innerhalb des Verbindungsmittels bringbar sind. Erfindungsgemäß kann weiter vorgesehen sein, dass in einem ersten Schritt die formschlüssige Verbindung zwischen dem Verbindungselement und einem Positionierelement erfolgt, wonach die beiden Elemente bevorzugt gleichzeitig mit einer Herstellung eines Kontakts zwischen der zumindest einen Kontaktschicht und dem zumindest einen Kontaktkörper kraftschlüssig lösbar verbindbar sind. Erst nach Abschluss dieser Schritte erfolgt die Übertragung von elektrischer Energie zu einem in einem Fahrzeug angeordneten Akkumulator bzw. dessen Steuer- und/oder Leistungselektronik.

Dazu kann ein erster mechanischer Taster bzw. Sensor vorgesehen sein, welcher feststellt, ob die Kontaktkörper vollständig aus dem Verbindungselement geschoben wurden. Darüber hinaus kann ein zweiter Taster bzw. Sensor vorhanden sein, welcher z. B. außen am Positionierkonus des Verbindungselementes angeordnet sein kann und bei Kontakt mit einem Positionierelement betätigt wird. Beide Sensoren bzw. Taster können bevorzugt mit einer Und-Verknüpfung miteinander verbunden sein, wodurch beide betätigt sein müssen, um z. B. einen Stromfluss überhaupt zu ermöglichen. Weiter ermöglichen diese Sensoren auch eine sofortige Unterbrechung des Stromflusses, wenn die Elemente voneinander getrennt werden.

Besonders günstig ist es, wenn das Verbindungselement an einer Hebevorrichtung angeordnet ist. Die Hebevorrichtung kann mit Vorteil durch einen Linearaktor angetrieben und/oder als Roboterarm ausgebildet sein und an einem Boden eines Parkplatzes angeordnet sein, wobei diese bei Nichtgebrauch möglichst flach vorzugsweise bündig mit dem Boden abschließen kann. Besonders günstig ist es, wenn das Verbindungselement so an der Hebevorrichtung angeordnet ist, dass dieses stets etwa parallel zum Boden und/oder zur Kontaktierungsplatte ausgerichtet ist. Ferner kann das Verbindungselement bewegbar bzw. auslenkbar an der Hebevorrichtung angeordnet sein, um ein selbsttätiges und nachgiebiges Einrasten in eines der Positionierelemente beim Anstehen an der Kontaktierungsplatte zu ermöglichen. Diese seitliche bzw. laterale Auslenkung in x-Richtung und in y-Richtung kann beispielsweise über Federn erfolgen. Eine x-y-Ebene entspricht dabei einer Ebene, in welcher die einzelnen Zellen der Kontaktierungsplatte angeordnet sind, wobei sich senkrecht dazu eine z-Richtung befindet. Das Positionierelement wird entsprechend dieser Ebene in x-Richtung und in y-Richtung ausgelenkt. Solche Federn können darüber hinaus beim Lösen der Verbindung ein selbstständiges Rückführen des Verbindungselementes in dessen Ausgangsposition ermöglichen.
Dazu ist es weiter günstig, wenn die Hebevorrichtung selbsttätig verfahrbar ist. Somit erfolgt sowohl eine Positionierung des Verbindungselementes in einem der Positionierelemente der Kontaktierungsplatte als auch eine Übertragung von elektrischer Energie automatisiert und selbsttätig. Es ist weder ein händisches Zusammenbringen von Verbindungselement und Fahrzeug noch eine exakte Positionierung des Fahrzeuges notwendig, da mehrere Möglichkeiten bzw. Positionierelemente vorhanden sind, um das Verbindungselement aufzunehmen. Aufgrund dessen kann die z. B. als Roboterarm ausgebildete Hebevorrichtung in einer Achse (z-Richtung) verfahrbar ausgebildet sein und muss nur eine Auf- bzw. Abwärtsbewegung durchführen. Zum endgültigen Einrasten ist das an der Hebevorrichtung angeordnete Verbindungselement seitlich um mindestens einen Zellenumkreisradius auslenkbar (in x-Richtung und y-Richtung), sodass dieses stets eine diskrete Position einnimmt. Es kann weiter vorgesehen sein, dass auch die Herstellung einer leitenden Verbindung zwischen dem Verbindungselement und einem der Positionierelemente autonom bzw. automatisch von der Hebevorrichtung durchführbar ist, um eine Speichereinheit für elektrische Energie in einem Fahrzeug selbsttätig aufzuladen.

Die erfindungsgemäße Ladevorrichtung ermöglicht ein ständiges Verbundensein eines Elektrofahrzeuges bzw. Plug-in-Hybridfahrzeuges mit einem Stromnetz. Dadurch ist ein gesteuertes Laden möglich und teure Spitzenverbrauchszeiten können vermieden werden. Dazu kann eine Steuereinheit und/oder eine Kommunikationseinheit vorhanden sein, mit welcher das Fahrzeug bzw. die Speichereinheit mit dem Stromnetz bzw. dem stationären Teil der Ladevorrichtung kommuniziert. Eine solche Kommunikation erfolgt mit Vorteil drahtlos und automatisiert.

Eine Verwendung einer erfindungsgemäßen Ladevorrichtung erfolgt mit Vorteil beim autonomen Laden einer Speichereinheit für elektrische Energie in einem Fahrzeug. Das weitere Ziel wird erreicht, wenn bei einem Elektrofahrzeug der eingangs genannten Art eine Kontaktierungsplatte mit einer Vielzahl von Positionierelementen insbesondere bodenseitig am Elektrofahrzeug angeordnet ist und zumindest ein Verbindungselement zur Stromübertragung vorgesehen ist, welches beim Zusammenführen mit der Kontaktierungsplatte positionsunabhängig und nachgiebig in eines der Positionierelemente einrastet.

Von Vorteil ist dabei insbesondere, dass durch das positionsunabhängige und nachgiebige Einrasten des Verbindungselementes in eines der Positionierelemente der Kontaktierungsplatte ein automatisiertes sowie autonomes Laden des Elektrofahrzeuges bzw. einer Speichereinheit in demselben möglich ist. Dabei ist es einerseits möglich eine Speichereinheit aufzuladen und andererseits kann auch elektrische Energie in das Stromnetz zurückgeführt werden. Bevorzugt ist die Kontaktierungsplatte dabei so am Elektrofahrzeug angeordnet, dass dieses annähernd beliebig auf einem Parkplatz positionierbar ist. Durch das selbsttätige Einrasten ist auch kein Hantieren mit einem Kabel oder dergleichen notwendig. Erfindungsgemäß kann dabei weiter vorgesehen sein, dass die Kontaktierungsplatte wenig Eigengewicht aufweist und somit das Gewicht des Elektrofahrzeuges nicht merklich erhöht.

Das verfahrensmäßige Ziel wird erreicht, wenn bei einem Verfahren der eingangs genannten Art zumindest ein Verbindungselement zur Stromübertragung mit einer am Fahrzeug angeordneten Kontaktierungsplatte zusammengeführt wird, wobei das Verbindungselement bei einem Kontakt mit der Kontaktierungsplatte positionsunabhängig und nachgiebig in eines von einer Vielzahl von an dieser angeordneten Positionierelementen eingerastet wird.

Ein Vorteil des erfindungsgemäßen Verfahrens ist insbesondere darin zu sehen, dass durch das positionsunabhängige und nachgiebige Einrasten des Verbindungselementes eine Verbindung zwischen der Kontaktierungsplatte und dem Verbindungselement selbsttätig hergestellt wird. Steht das Verbindungselement an einer beliebigen Stelle der Kontaktierungsplatte an, so wird dieses selbsttätig bzw. autonom in eines der Positionierelemente, welche an der Kontaktierungsplatte angeordnet sind, eingerastet. Dazu ist bevorzugt vorgesehen, dass das Verbindungselement formschlüssig von einem der Positionierelemente aufgenommen wird. Die Positionierelemente werden dabei insbesondere in jeweils einer sechseckigen Zelle gelagert, wobei jede Zelle konusförmige Ausnehmungen aufweist und jedes Positionierelement der Kontaktierungsplatte baugleich ausgebildet wird. Mit einem erfindungsgemäßen Verfahren kann beispielsweise ein Elektrofahrzeug oder Plug-in-Hybridfahrzeug effizient und komfortabel mit elektrischer Energie versorgt werden, wobei die Kontaktierungsplatte bevorzugt an oder in diesem angeordnet ist.

Es kann bevorzugt vorgesehen sein, dass zumindest ein innerhalb des Verbindungselementes angeordneter Kontaktkörper bei formschlüssigem Kontakt des Verbindungselementes mit einem Positionierelement in einen in einer koaxialen Aussparung des Positionierelementes angeordneten Teil einer Kontaktschicht gedrückt und kraftschlüssig lösbar verbunden wird. Dazu ist es notwendig, dass der Kontaktkörper außer bei einer Herstellung einer leitenden Verbindung immer innerhalb des Verbindungselementes angeordnet ist. Günstig ist es dabei, wenn mehrere koaxial angeordnete Kontaktkörper vorgesehen sind, welche zur Herstellung einer leitenden Verbindung in ebenso koaxial ausgebildete Aussparungen eines Positionierelementes gedrückt werden. Gleichzeitig mit der Herstellung einer leitenden Verbindung werden die beiden Elemente auch kraftschlüssig miteinander verbunden, um ein unterbrechungsfreies Übertragen von elektrischer Energie zu ermöglichen. Bei einer Herstellung einer dreiphasigen Verbindung werden drei koaxial angeordnete Kontaktkörper unter Kraftaufwendung in drei koaxial angeordnete Aussparungen eines Positionierelementes positioniert, wobei die drei Kontaktkörper des Verbindungselementes jeweils in mehrere Teilstücke bzw. Segmente, beispielsweise in drei, sechs oder acht, aufgeteilt sind. In den Aussparungen der Positionierelemente ist dabei jeweils eine Kontaktschicht gelagert, in deren Richtung die Kontaktkörper geschoben werden.

Zweckmäßig ist es dabei, wenn bei einer Einnahme einer vorbestimmten Position des Fahrzeuges mit der Kontaktierungsplatte das Verbindungselement mit einer Hebevorrichtung selbsttätig zur Kontaktierungsplatte bewegt wird. Die Hebevorrichtung kann z. B. durch einen Linearaktor angetrieben und/oder als Roboterarm ausgebildet sein. Die Hebevorrichtung wird dabei bevorzugt in einem Boden eines Parkplatzes oder dergleichen angeordnet und in einer Achse (z-Richtung) verfahren, um an einer beliebigen Position an der Kontaktierungsplatte anzustehen, wobei die Kontaktierungsplatte bevorzugt bodenseitig an einem Fahrzeug angeordnet wird. Eine Verbindung zwischen Kontaktierungsplatte und Verbindungselement wird also frei von händischer Unterstützung hergestellt. Das Verbindungselement wird bevorzugt in einer Ausrichtung etwa parallel zum Boden zur Kontaktierungsplatte hin bewegt, wobei die Kontaktierungsplatte bodenseitig an einem Fahrzeug angeordnet sein kann. Bei einem Anstehen an der Kontaktierungsplatte wird das Verbindungselement seitlich um bis zu einen Zellenumkreisradius ausgelenkt (in x-Richtung und in y-Richtung), sodass von diesem schließlich eine diskrete Position in einem der Positionierelemente eingenommen wird. Dazu wird das Verbindungselement bevorzugt beweglich bzw. auslenkbar an der Hebevorrichtung angeordnet, beispielsweise mit zumindest einer Feder. Zum Schutz der Hebevorrichtung bei Nichtgebrauch kann eine Abdeckvorrichtung für diese vorgesehen sein.

Dabei kann ein Positionsbestimmungssystem vorgesehen sein, welches einen Fahrzeuglenker darauf hinweist, ob vom Fahrzeug eine Position eingenommen wird bzw. wurde, bei welcher ein solches automatisiertes Verbinden des Verbindungselementes mit einem Positionierelement der Kontaktierungsplatte möglich ist.

Es kann bevorzugt vorgesehen sein, dass bei vollständigem Kontakt des Kontaktkörpers des Verbindungselementes mit der Kontaktschicht des Positionierelementes und nach einer selbsttätigen kraftschlüssigen Verbindung der des Positionierelementes mit dem Verbindungselement eine Speichereinheit im Fahrzeug aufgeladen wird. In einem ersten Schritt wird also eine Verbindung zwischen der Kontaktierungsplatte und dem Verbindungselement automatisiert hergestellt und in einem zweiten Schritt wird die Speichereinheit eines Fahrzeuges wiederum selbsttätig aufgeladen. Durch die koaxiale Ausbildung der zumindest einen Kontaktschicht und des zumindest einen Kontaktkörpers können diese dünn ausgebildet werden und trotzdem eine große Querschnittsfläche aufweisen, wodurch ein Ladezyklus mit einer hohen Ladeleistung durchgeführt wird.

Bevorzugt kann dabei weiter vorgesehen sein, dass nach einem abgeschlossenen Ladezyklus die kraftschlüssige Verbindung selbsttätig gelöst und das Verbindungselement mit der Hebevorrichtung in eine Ausgangsposition verfahren wird. Die Ausgangsposition kann dabei in einem Boden eines Parkplatzes für ein Fahrzeug angeordnet sein. Zum Laden eines Fahrzeuges bzw. einer in diesem angeordneten Speichereinheit wird dieses in einer beliebigen Position auf einem Parkplatz geparkt, wonach ein Verbindungselement mit einer an diesem Fahrzeug angeordneten Kontaktierungsplatte in Verbindung gebracht wird und anschließend eine Ladeeinrichtung des Fahrzeuges aufgeladen wird. Das Ganze erfolgt automatisiert bzw. autonom und ohne Mitwirkung eines Fahrzeuglenkers. Auch nach einem abgeschlossenen Ladezyklus ist kein händisches Mitwirken notwendig, da auch ein Lösen des Verbindungselementes von der Kontaktierungsplatte automatisiert und selbsttätig erfolgt.

Mit Vorteil kann darüber hinaus vorgesehen sein, dass bei Nichtgebrauch der Kontaktierungsplatte diese von einer Abdeckeinrichtung insbesondere wasserdicht abgedeckt wird. Dabei wird auch ein Öffnen und/oder Schließen der Abdeckeinrichtung nach einer Einnahme einer Position zum Laden bevorzugt automatisiert durchgeführt. Mit der Abdeckeinrichtung wird die Kontaktierungsplatte zudem vor Verschmutzungen und/ oder Beschädigungen geschützt. Dazu kann die Abdeckeinrichtung beschichtet sein. Ferner kann eine Heizvorrichtung vorgesehen sein, um insbesondere im Winter ein vereisen oder dergleichen der Abdeckeinrichtung zu vermeiden.
Weitere Merkmale, Vorteile und Wirkungen ergeben sich aus dem nachfolgend dargestellten Ausführungsbeispiel. In den Zeichnungen, auf welche dabei Bezug genommen wird, zeigen:
Fig. 1 eine erfindungsgemäße Ladevorrichtung;
Fig. 2a eine schematische Darstellung einer Kontaktierungsplatte einer erfindungsgemäßen Ladevorrichtung;
Fig. 2b einen Schnitt durch eine schematische Darstellung einer Kontaktierungsplatte gemäß Fig 2a;
Fig. 2c einen weiteren Schnitt durch eine schematischen Darstellung einer Kontaktierungsplatte gemäß Fig 2a;
Fig. 3a eine weitere Ansicht einer Kontaktierungsplatte einer erfindungsgemäßen Ladevorrichtung;
Fig. 3b einen Schnitt durch eine Kontaktierungsplatte gemäß Fig 3a;
Fig. 3c einen weiteren Schnitt durch eine Kontaktierungsplatte gemäß Fig 3a;
Fig. 4 eine Untersicht einer Kontaktierungsplatte einer erfindungsgemäßen Ladevorrichtung;
Fig. 5 eine weitere Ansicht einer Kontaktierungsplatte einer erfindungsgemäßen Ladevorrichtung;
Fig. 6a eine erfindungsgemäße Ladevorrichtung ohne Kontakt;
Fig. 6b einen Schnitt durch eine erfindungsgemäße Ladevorrichtung gemäß Fig. 6a;
Fig. 6c einen weiteren Schnitt durch eine erfindungsgemäße Ladevorrichtung gemäß Fig. 6a;
Fig. 7a eine erfindungsgemäße Ladevorrichtung mit Kontakt;
Fig. 7b einen Schnitt durch eine erfindungsgemäße Ladevorrichtung gemäß Fig. 7a;
Fig. 7c einen weiteren Schnitt durch eine erfindungsgemäße Ladevorrichtung gemäß Fig. 7a;
Fig. 7d eine weitere Ansicht einer erfindungsgemäßen Ladevorrichtung gemäß Fig. 7a;
Fig. 8a eine weitere Ansicht einer erfindungsgemäßen Ladevorrichtung mit Kontakt;
Fig. 8b einen Ausschnitt aus einer erfindungsgemäßen Ladevorrichtung mit Kontakt gemäß Fig. 8a;
Fig. 9 ein Fahrzeug bei einem Ladezyklus;
Fig. 10a eine Hebevorrichtung;
Fig. 10b eine weitere Ansicht einer Hebevorrichtung;
Fig. 11 Varianten einer Positionierung eines Fahrzeuges auf einem Parkplatz;
Fig. 12a eine weitere Hebevorrichtung;
Fig. 12b eine Öffnungseinrichtung;
Fig. 12c eine weitere Ansicht einer Öffnungsvorrichtung;
Fig. 13 einen Schnitt durch einen Ausschnitt einer Abdeckeinrichtung;
Fig. 14 einen Schnitt durch einen Elektromagneten mit teilweise entfernten äußeren Eisenkern;
Fig. 15 einen Schnitt durch einen Ausschnitt einer Abdeckeinrichtung mit zwei Elektromagneten und einem Verbindungselement;
Fig. 16 eine schematische Darstellung einer Kontaktierungsplatte mit Abdeckeinrichtung;
Fig. 17a eine schematische Darstellung eines erfindungsgemäßen Verfahrens;
Fig. 17b eine weitere schematische Darstellung eines erfindungsgemäßen Verfahrens gemäß Fig. 17a;
Fig. 17c eine weitere Ansicht einer schematischen Darstellung eines erfindungsgemäßen Verfahrens gemäß Fig. 17a;
Fig. 18a eine Ansicht einer schematischen Darstellung eines Verfahrens gemäß dem Stand der Technik;
Fig. 18b eine Ansicht einer schematischen Darstellung eines erfindungsgemäßen Verfahrens.

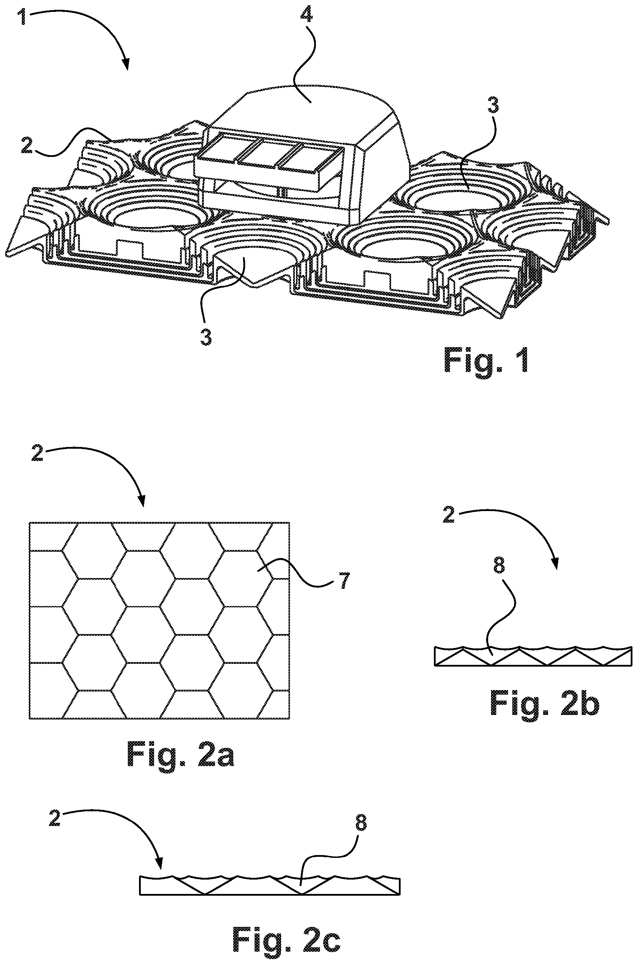

Fig. 1 zeigt eine erfindungsgemäße Ladevorrichtung 1 mit einer Kontaktierungsplatte 2, an welcher eine Vielzahl von Positionierelementen 3 angeordnet ist. Weiter zeigt Fig. 1 ein Verbindungselement 4, welches von einem der Positionierelemente 3 aufgenommen ist. Die Kontaktierungsplatte 2 ist dabei mehrschichtig aufgebaut.

In Fig. 2a bis 2c ist ein schematischer Aufbau der Kontaktierungsplatte 2 gezeigt. Fig. 2a zeigt dabei, dass diese in gleichmäßige, sechseckige Zellen 7 aufgeteilt ist, wobei die Zellen 7 regelmäßig angeordnet sind. Jede dieser Zellen 7 umfasst eine konusförmige Ausnehmung 8 in Richtung deren Mittelpunkt wie in Fig. 2b und 2c gezeigt, welche jeweils einen Schnitt durch die Kontaktierungsplatte 2 gemäß Fig. 2a zeigen.

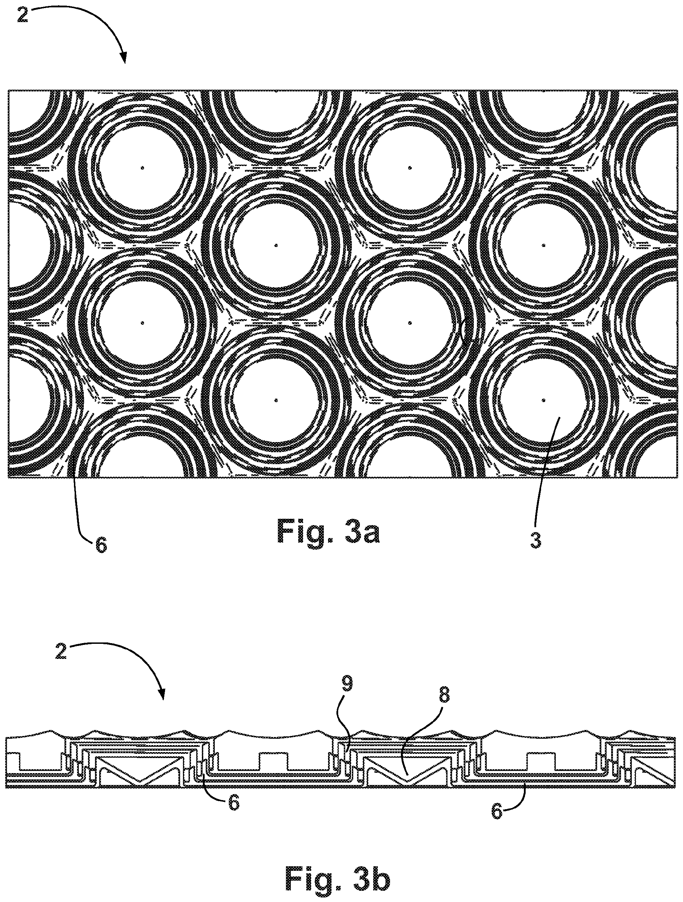

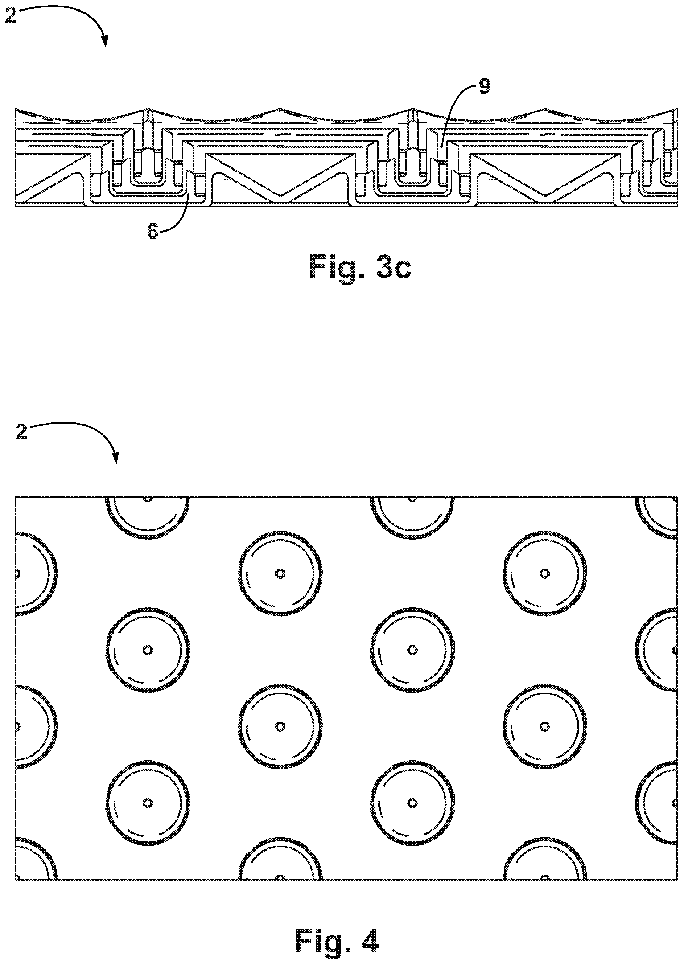

Fig. 3a bis 3c zeigen weitere Ansichten der Kontaktierungsplatte 2, in welchen der schichtartige Aufbau dieser ersichtlich ist, wobei Fig 3a eine Ansicht der nach außen liegenden Seite der Kontaktierungsplatte zeigt und Fig. 3b und 3c jeweils einen Schnitt durch die Kontaktierungsplatte 2 gemäß Fig. 3a. In der Kontaktierungsplatte 2 ist eine Kontaktschicht 6 abwechselnd mit einer Isolierschicht 5 angeordnet, wobei drei Kontaktschichten 6 zur Herstellung einer dreiphasigen Verbindung vorgesehen sind, um in weiterer Folge Wechselspannung bzw. Drehstrom zu übertragen. In einer Draufsicht gemäß Fig. 3a ist weiter ersichtlich, dass in den konusförmigen Ausnehmungen 8 Aussparungen 9 vorgesehen sind, in welchen die Kontaktschicht 6 angeordnet ist. Die Aussparungen 9 sind dabei bevorzugt hohlzylindrisch und koaxial ausgebildet. Weiter können diese eine jeweils unterschiedliche Tiefe aufweisen, wobei die Aussparungen 9 relativ betrachtet alle in etwa gleich tief ausgebildet sein können. Ferner kann vorgesehen sein, dass sich die Kontaktschicht 6 über die gesamte Kontaktierungsplatte 2 erstreckt bzw. jeweils eine Kontaktschicht 6 einer Aussparung 9 eines Positionierelementes 3 mit einer entsprechenden Kontaktschicht 6 eines nächsten Positionierelementes 3 verbunden ist. Günstig ist es dabei, wenn der gesamte restliche Teil der Kontaktierungsplatte 2 aus der bzw. mehreren Isolierschichten 5 besteht.

Eine Untersicht bzw. eine Ansicht einer innenliegenden Seite der Kontaktierungsplatte 2 ist in Fig. 4 gezeigt, worin ersichtlich ist, dass die Bereiche zwischen den Ausnehmungen 8 aus der Kontaktierungsplatte 2 ausgenommen sind, um Material und Gewicht dieser zu reduzieren.

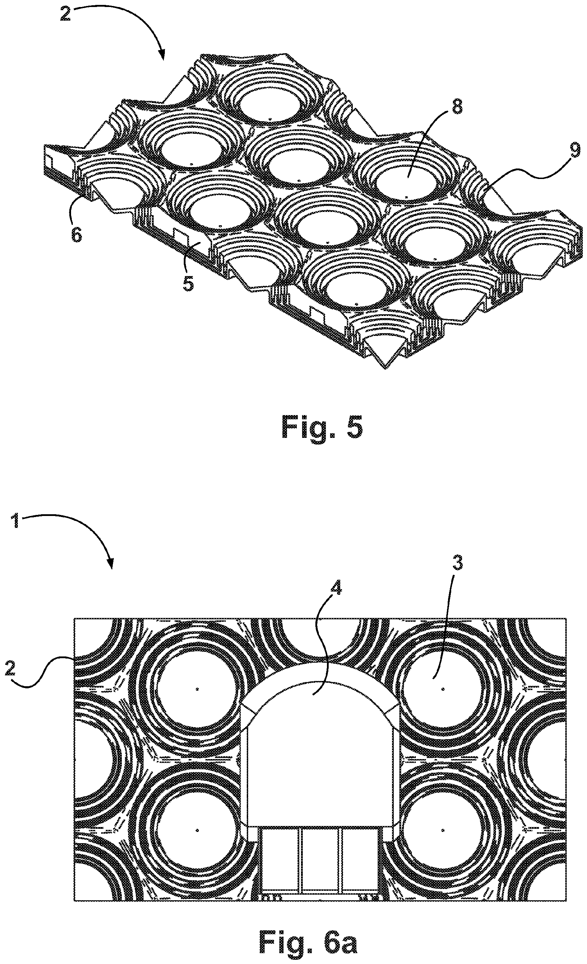

Eine weitere Ansicht der Kontaktierungsplatte 2 ist in Fig. 5 gezeigt, in welcher der schichtweise Aufbau ersichtlich ist, wobei die Kontaktschichten 6 jeweils in den Aussparungen 9 angeordnet sind. Die gesamte Kontaktierungsplatte 2 ist dabei schichtweise aufgebaut, wobei sich Isolierschicht 5 und Kontaktschicht 6 jeweils abwechseln.

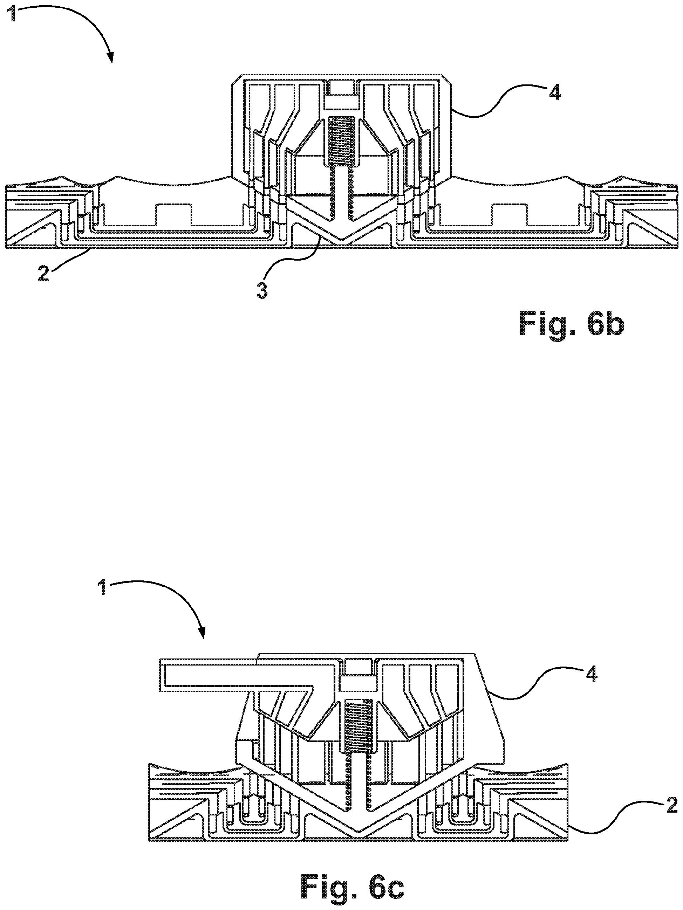

Fig. 6a bis 6c zeigen jeweils die Ladevorrichtung 1 mit einer Kontaktierungsplatte 2 mit einem darauf angeordneten Verbindungselement 4, wobei keine leitende Verbindung hergestellt ist. Das Verbindungselement 4 ist jedoch formschlüssig von einem der Positionierelemente 3 der Kontaktierungsplatte 2 aufgenommen bzw. ist das Verbindungselement 4 diskret in einem Mittelpunkt einer Zelle 7 ausgerichtet. Dazu kann vorgesehen sein, dass das Verbindungselement 4 insbesondere konisch mit einer stumpfen bzw. leicht abgerundeten Spitze bzw. Ende ausgebildet ist. Dadurch ist sichergestellt, dass das Verbindungselement 4 formschlüssig in jedes einzelne der Positionierelemente 3 der Kontaktierungsplatte 2 positionierbar ist. Die stumpfe Spitze ermöglicht dabei ein selbsttätiges sowie nachgiebiges Einrasten des Verbindungselementes 4 in eines der Positionierelemente 3. Es muss durch eine solche Ausbildung kein großer Widerstand überwunden werden. Ferner kann der Konus des Verbindungselementes 4 mit einer Lagefläche abgeschlossen sein, welche einen größeren Durchmesser aufweist als der größte Durchmesser des Konus. Dadurch ist sichergestellt, dass das Verbindungselement 4 eine gerade Endposition in einem der Positionierelemente 3 einnimmt und nicht schief ausgerichtet in diesem stecken bleibt. Dazu kann eine Drehachse des Verbindungselementes 4 koaxial mit der konusförmigen Ausnehmung 8 des Positionierelementes 3 sein.

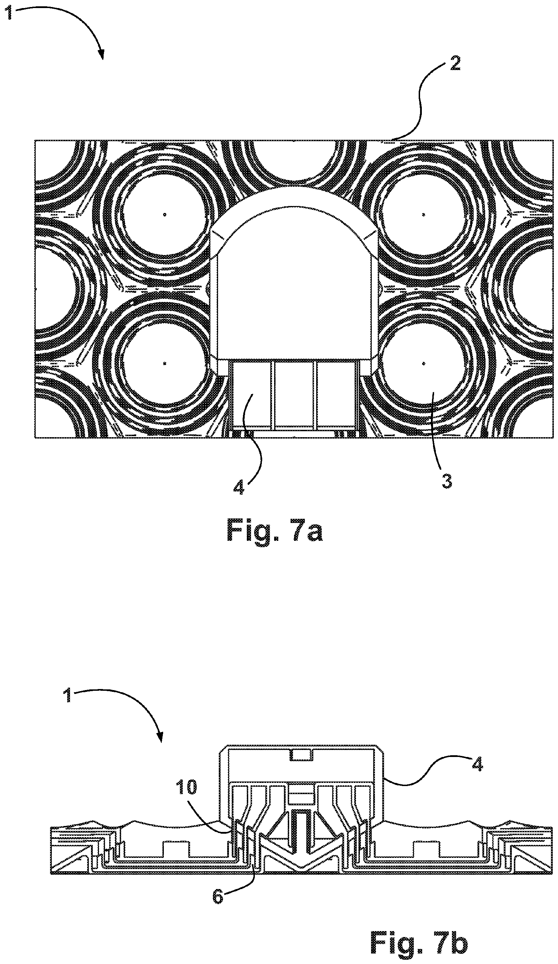

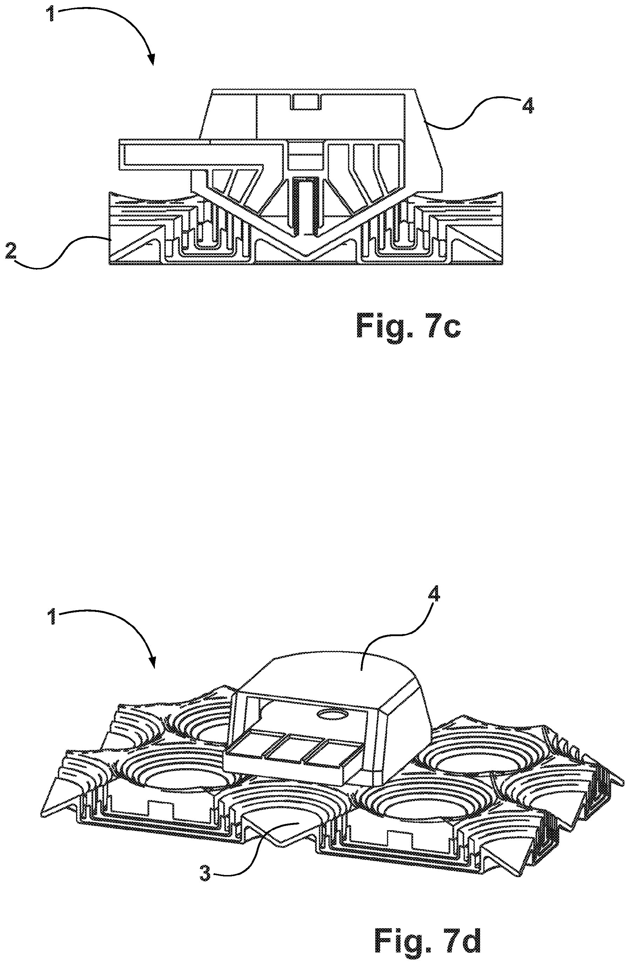

In Fig. 7a bis 7d ist eine Ladevorrichtung 1 mit einer Kontaktierungsplatte 2 mit darauf angeordnetem Verbindungselement 4 gezeigt, wobei dieses formschlüssig von einem der Positionierelemente 3 verbunden ist und eine leitende Verbindung hergestellt ist. Hierfür sind Kontaktkörper 10 teilweise aus dem Verbindungselement 4 gedrückt und treten bei bzw. nach formschlüssigem Kontakt der Elemente 3, 4 miteinander in Verbindung, um in weiterer Folge ein unterbrechungsfreies Laden zu ermöglichen. Es ist zumindest ein Kontaktkörper 10 vorgesehen, günstig ist es jedoch, wenn mehrere, koaxial angeordnete Kontaktkörper 10 im Verbindungselement 4 angeordnet sind, welche entsprechend der Kontaktschicht 6 ausgebildet sind. Es hat sich bewährt, dass jeder koaxiale Kontaktkörper 10 in mindestens sechs Segmente unterteilt ist, um eine Nachgiebigkeit dieser zu erhöhen und somit einen mechanischen Kontaktwiderstand mit der Kontaktierungsplatte 2 zu erhöhen, sodass die einzelnen Segmente mit einem gewissen Druck gegen die Kontaktschichten 6 des Positionierelementes 3 drücken, um einen elektrischen Kontaktwiderstand zu verringern. Zugleich mit der Herstellung der leitenden Verbindung wird das Verbindungselement 4 mit dem Positionierelement 3 der Kontaktierungsplatte 2 kraftschlüssig, lösbar verbunden, beispielsweise mit einer Feder. Um sicherzustellen, dass erst nach formschlüssiger Verbindung der beiden Verbindungselemente 3, 4 eine leitende Verbindung herstellbar ist, können Magnete im Verbindungselement 4 vorgesehen sein. Die Magnete sorgen dafür, dass sich das Verbindungselement 4 an einer Oberfläche der Kontaktierungsplatte 2 in einer Zelle 7 ausrichtet ohne dass die Kontaktkörper 10 vorzeitig aus dem Verbindungselement 4 gedrückt werden.

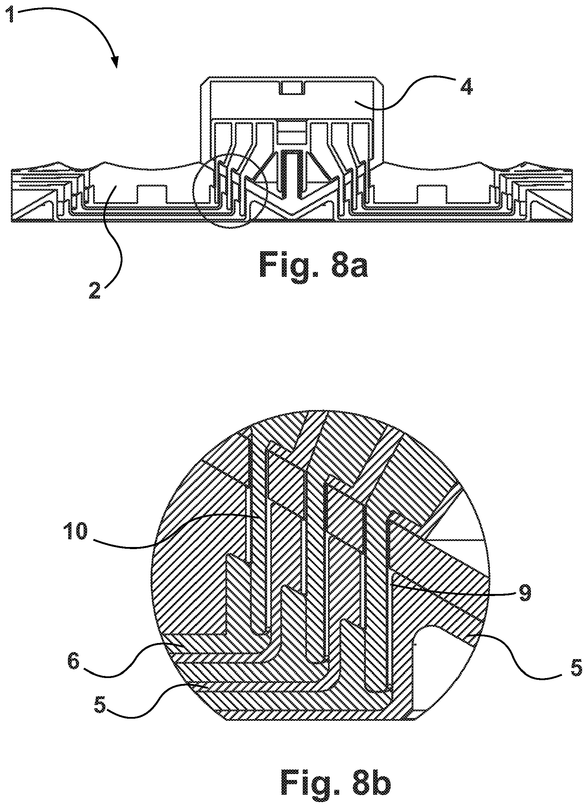

Fig. 8a zeigt nochmals eine Ladevorrichtung 1, bei welcher die Kontaktkörper 10 des Verbindungselementes 4 mit den Kontaktschichten 6 des Positionierelementes 3 leitend verbunden sind. In Fig. 8b ist ein Ausschnitt der Verbindung gemäß Fig. 8a gezeigt. Die Kontaktkörper 10 des Verbindungselementes 4 sind in Kontakt mit den Kontaktschichten 6 des Positionierelementes 3. Zwischen den Kontaktschichten 6 sind die Isolierschichten 5 angeordnet. In Fig. 8a und 8b ist eine dreiphasige Verbindung zur Übertragung von Wechselspannung zwischen der Kontaktierungsplatte 2 bzw. einem Positionierelement 3 und dem Verbindungselement 4 hergestellt. Dazu sind in jeder Zelle 7 bzw. in jedem Positionierelement 3 drei koaxiale Aussparungen 9 vorgesehen und in jeder Aussparung 9 jeweils eine Kontaktschicht 6 ringförmig bzw. ebenfalls koaxiale angeordnet. Durch die ringförmige Ausbildung der Kontaktschicht 6 kann diese dünn ausgebildet sein, beispielsweise dünner als 2 mm, insbesondere etwa 1 mm, und trotzdem eine große Querschnittsfläche aufweisen, da eine Umfangslänge der Kontaktschicht 6 um zumindest eine Größenordnung größer ist als dessen Dicke. Durch die große Querschnittsfläche ist eine große Ladeleistung erreichbar, wodurch eine Ladedauer herabsetzbar ist. Entsprechend dazu sind im Verbindungselement 4 drei ringförmige Kontaktkörper 10 angeordnet, welche in mehrere Segmente pro Ring aufgeteilt sind. Besonders bevorzugt erstrecken sich die Kontaktschichten 6 leicht angeschrägt nach oben, sodass bei einem Zusammenschluss derselben mit den Kontaktkörpern 10 ein leichter Widerstand zu überwinden ist und folglich ein vollflächiger Kontakt entsteht.

Neben einer dreiphasigen Verbindung kann die Ladevorrichtung 1 auch für eine fünfphasige Verbindung zwischen Kontaktierungsplatte 2 bzw. einem Positionierelement 3 und Verbindungselement 4 entsprechend ausgebildet sein. Dazu sind fünf koaxialen Aussparungen 9 in jeder Zelle 7 vorgesehen, wobei wiederum in jeder Aussparung 9 eine Kontaktschicht 6 angeordnet ist. Ein schichtartiger Aufbau der Kontaktierungsplatte 2 erfolgt dabei entsprechend dem dreiphasigen Fall.

Eine erfindungsgemäße Ladevorrichtung 1 kann darüber hinaus auch für eine Übertragung von Gleichstrom ausgebildet sein. Dazu können zwei Verbindungselemente 4 vorgesehen sein, in welchen jeweils ein Kontaktkörper 10 mit jeweils einer Phase angeordnet ist. Die Positionierelemente 3 können zur Aufnahme der Verbindungselemente 4 paarweise ausgebildet sein und entsprechend jeweils eine Kontaktschicht 6 mit einer Phase umfassen.

Die Kontaktierungsplatte 2 kann auch so ausgebildet sein, dass diese beispielsweise konusförmige Verbindungselemente 4 umfasst und zum Herstellen einer Verbindung ein Positionierelement 3 mit beispielsweise einer konusförmigen Ausnehmung auf eines der Verbindungselemente 4 aufsetzbar ist.

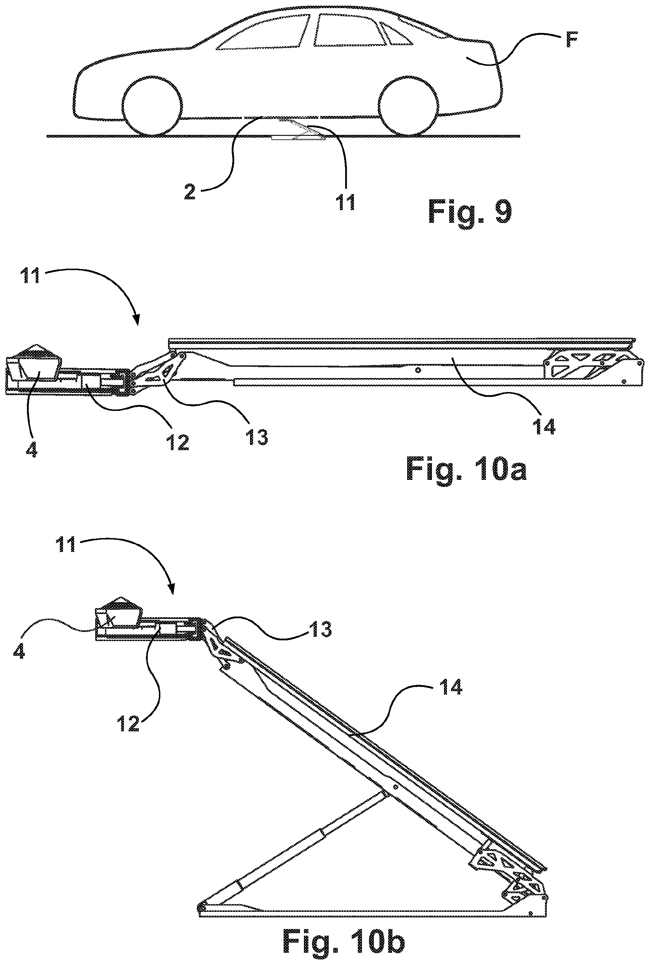

Es kann mit Vorteil vorgesehen sein, dass die Kontaktierungsplatte 2 wie in Fig. 9 gezeigt insbesondere etwa mittig bodenseitig an einem Fahrzeug F wie einem Elektrofahrzeug bzw. Plug-in-Hybridfahrzeug angeordnet ist. Diese kann dabei beispielsweise etwa 80 cm mal 60 cm groß sein. Das Verbindungselement 4 kann bevorzugt an einer Hebevorrichtung 11 angeordnet sein, wobei diese etwa mittig am Boden eines Parkplatzes angeordnet sein kann und in einer eingefahrenen Position bzw. bei Nichtgebrauch bündig mit dem Boden abschließt. Durch eine solche Anordnung der Kontaktierungsplatte 2 am Fahrzeug F zum einen und die Anordnung des Verbindungselementes 4 bzw. der Hebevorrichtung 11 zum anderen ist ein einfaches und automatisiertes Verbinden des Verbindungselementes 4 mit der Kontaktierungsplatte 2 bzw. einem darauf angeordneten Positionierelementes 3 möglich. Die Hebevorrichtung 11 kann mit Vorteil als Roboterarm ausgebildet sein.

Fig. 10a und 10b zeigen die Hebevorrichtung 11 mit dem Verbindungselement 4. Die Hebevorrichtung 11 kann dabei in einem Boden eines Privatparkplatzes oder auch am Boden eines öffentlichen Bereiches wie eines Einkaufszentrums, einer Autobahnraststätte oder eines Taxistandes zum Laden von Fahrzeugen F angeordnet sein. Eine Verbindung zwischen Kontaktierungsplatte 2 und Verbindungselement 4 ist mit einer Ladevorrichtung 1 stets automatisiert herstellbar. Von Vorteil ist es, wenn das Fahrzeug F mit dem stationären Teil der Ladevorrichtung 1 kabellos kommuniziert und die Kontaktierungsplatte 2 eine eindeutig zuordenbare Identifikationsnummer aufweist.

Es kann weiter vorgesehen sein, dass das Verbindungselement 4 so an der Hebevorrichtung 11 angeordnet ist, dass dieses immer etwa parallel zum Boden ausgerichtet ist. Die Hebevorrichtung 11 kann dazu eine endseitige Halteeinrichtung 12 umfassen, an welcher das Verbindungselement 4 angeordnet ist, wie in den Fig. 10a und 10b gezeigt. Das Verbindungselement 4 kann ferner über z. B. Federn beweglich an der endseitigen Halteeinrichtung 12 gelagert sein, um zu einem Einrasten in eines der Positionierelemente 3 eine seitliche bzw. laterale Bewegung in x-Richtung und y-Richtung durchführen zu können. Es kann ferner eine Mechanik 13 zwischen der endseitigen Halteeinrichtung 12 und eines Armes 14 der Hebevorrichtung 11 vorgesehen sein, welche diesen mit der endseitigen Halteeinrichtung 12 auslenkbar verbindet. Fig. 10a zeigt die Hebevorrichtung 11 in einem eingefahrenen Zustand. Diese kann z. B. in einem Boden eines Parkplatzes angeordnet sein und bündig mit diesem abschließen. Dazu ist die endseitige Halteeinrichtung 12 durch die Mechanik 13 im Vergleich zum Arm 14 abgesenkt, wie in Fig. 10a gezeigt. In Fig.10b ist die Hebevorrichtung 11 in einem ausgefahrenen Zustand gezeigt, wobei die endseitige Halteeinrichtung 12 nun durch die Mechanik 12 nach oben gestreckt ist, insbesondere in eine Position, welche höher ist als der Arm 14 der Hebevorrichtung 11. Dadurch nimmt das an der endseitigen Halteeinrichtung 12 angeordnete Verbindungselement 4 eine höchste Position ein und kann in weiterer Folge in eines der Positionierelemente 3 einrasten. Dazu kann es günstig sein, wenn Anschlusskabel an der Hebevorrichtung 11 flexibel ausgebildet sind, um einen Positionsausgleich des Verbindungselementes 4 nicht zu beeinflussen. Die Anschlusskabel können z. B. als fein- bzw. feinstdrähtige Litzen aus Kupfer oder Aluminium ausgebildet und zusätzlich mit einem flexiblen bzw. dehnbaren Material wie Gummi oder Silicon isoliert sein. Weiter können einzelne Phasen in jeweils einzelnen Leitungen geführt sein, um eine Flexibilität nochmals zu erhöhen.

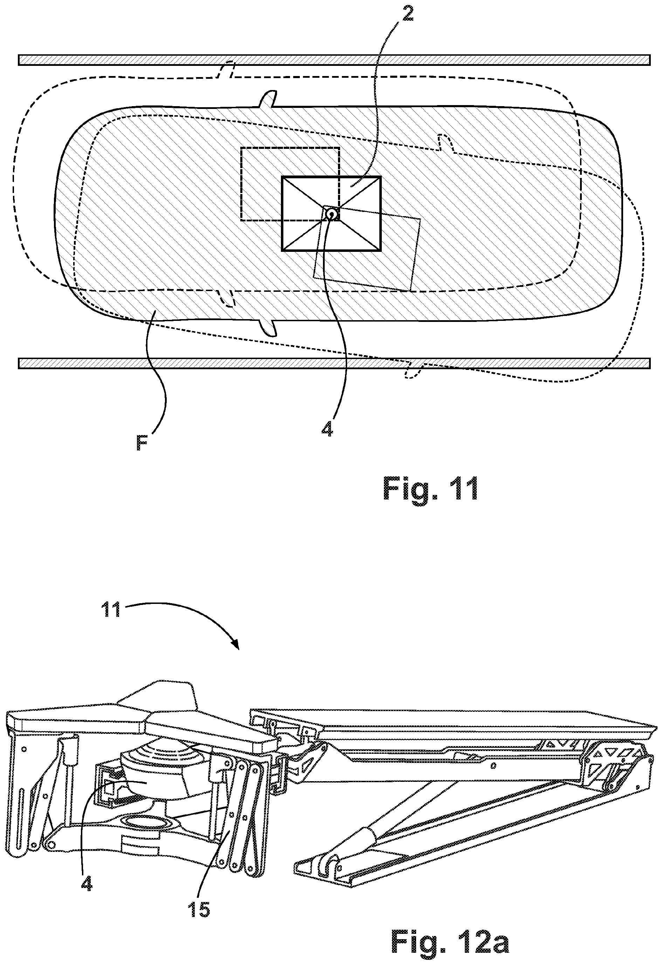

Varianten einer Positionierung eines Fahrzeuges F auf einem Parkplatz sind in Fig. 11 gezeigt, wobei mehrere Möglichkeiten einer Positionierung des Fahrzeuges F mit einer unterschiedlichen Schattierung bzw. Linienführung dargestellt sind. Ein solcher Parkplatz kann beispielsweise 2,3 m breit sein. Es kann vorgesehen sein, dass die Hebevorrichtung 11 mit dem Verbindungselement 4 etwa mittig am Boden eines solchen Parkplatzes angeordnet ist. Ein Fahrzeug F mit einer etwa mittig bodenseitig an diesem angeordneter Kontaktierungsplatte 2 ist in einer beliebigen Position auf einem solchen Parkplatz positionierbar, wie dies aus Fig. 11 ersichtlich ist. Es ist dabei von Vorteil, wenn eine Größe der Kontaktierungsplatte 2 so gewählt ist, dass das Verbindungselement 4 stets in einem der darauf angeordneten Positionierelemente 3 positionierbar ist, unabhängig davon, wie das Fahrzeug F am Parkplatz positioniert ist. Bei einer Parkplatzbreite von etwa 2,3 m kann die Kontaktierungsplatte 2 beispielsweise etwa 80 cm mal 60 cm groß sein.

Bei Nichtgebrauch der Kontaktierungsplatte 2 bzw. ohne Verbindung dieser zum Verbindungselement 4 ist es zweckmäßig, wenn diese von einer Abdeckeinrichtung 17 abgedeckt ist, welche die Kontaktierungsplatte 2 vor Verschmutzungen oder dergleichen schützt. Diese hierbei nicht gezeigte Abdeckeinrichtung 17 kann beispielsweise faltbar ausgebildet sein, wobei diese mit zumindest einem Magneten in Position gehalten sein kann bzw. eine Positionsänderung von z. B. einer Feder durchführbar ist. Es kann vorgesehen sein, dass die Kontaktierungsplatte 2 selbsttätig und automatisiert abgedeckt wird, sobald das Fahrzeug F eine Position zum Laden eingenommen hat. Weiter ist es zweckmäßig, wenn diese nach Abschluss eines Ladezyklus wieder selbsttätig schließt. Die Abdeckeinrichtung 17 kann dazu aus einzelnen flachen Lamellen aufgebaut sein, welche nur wenige Millimeter dünn sein können, beispielsweise etwa 2 mm bis 3 mm. Die Lamellen können jeweils mit Nut und Spund ineinandergreifen und bilden somit in einem geschlossenen Zustand eine dichte und flache Einheit, mit welcher die gesamte Kontaktierungsplatte 2 abdeckbar ist. Die einzelnen Lamellen können z. B. auf Schienen aufgefädelt sein und sich auf diesen bewegen. Zwischen je zwei aneinandergrenzenden Lamellen können diese an der Stelle, wo Nut und Spund ineinandergreifen, auseinandergeschoben werden. Es ergibt sich somit eine Öffnung in der Abdeckeinrichtung 17, welche einen Teil der Kontaktierungsplatte 2 freilegt. Die maximale Bewegung der Lamellen auf der Schiene kann am Anfang und am Ende der Schienen durch einen Anschlag begrenzt sein. Zusätzlich können die Lamellen durch Federn zusammendrückbar sein, sodass die Öffnung selbsttätig verschließbar ist. Die Breite jeder Lamelle kann z. B. der halben Breite einer Zelle 7 der Kontaktierungsplatte 2 entsprechen, wobei die Lamellen zumindest teilweise aus einem magnetischen Material ausgebildet sein können.

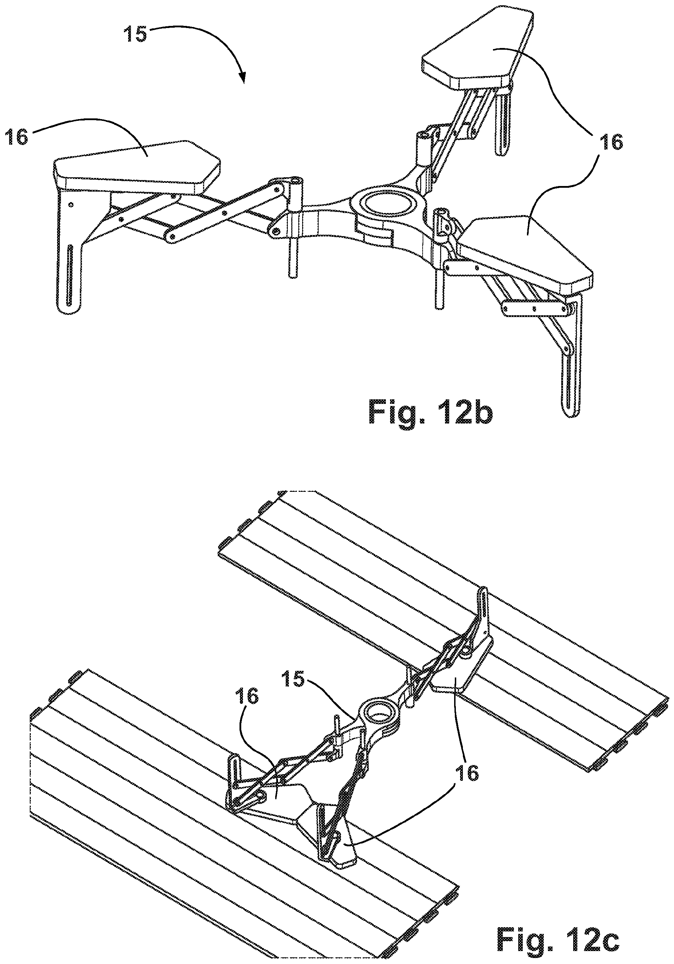

Um ein selbsttätiges Verbinden des Verbindungselementes 4 mit einem der Positionierelemente 3 der Kontaktierungsplatte 2 zu ermöglichen, kann an der Hebevorrichtung 11 eine Öffnungseinrichtung 15 angeordnet sein, sodass sich die Lamellen der Abdeckeinrichtung 17 bei Kontakt mit der Öffnungseinrichtung 15 automatisiert und an einer richtigen Stelle öffnen. Eine Hebevorrichtung 11 mit der Öffnungseinrichtung 15 ist in Fig. 12a gezeigt. Die Öffnungseinrichtung 15 ist dabei mit Vorteil so an der Hebevorrichtung angeordnet, dass die Öffnungseinrichtung 15 immer etwa parallel zum Boden angeordnet ist. Fig. 12b zeigt die Öffnungseinrichtung 15. Diese umfasst insbesondere zwei jeweils um 180° oder drei jeweils um 120° versetzte, um zumindest eine Achse bewegbare Arme, an welchen zumindest teilweise drehbare Magnete 16, insbesondere Permanentelektromagnete, angeordnet sein können. Solche Magnete 16 sind ohne Bestromung magnetisch, mit Bestromung kann eine Wirkung dieser Magnete 16 jedoch verstärkt oder durch umgekehrten Stromfluss aufgehoben werden. Beim Kontakt der Öffnungseinrichtung 15 mit der nicht gezeigten Abdeckeinrichtung 17 der Kontaktierungsplatte 2 haften die Arme durch die Magnete 16 an den Lamellen der Abdeckeinrichtung 17. Bei einem Aufbringen einer Druckkraft in Richtung der Abdeckeinrichtung 17 bzw. in z-Richtung durch die Öffnungseinrichtung 15 werden die Arme mit den Lamellen der Abdeckeinrichtung 17 in zwei entgegengesetzte Richtungen, welche sich in der x-y-Ebene befinden, auseinandergeschoben, ohne dass die Magnete 16 in x- und/oder y-Richtung verrutschen. Dazu kann eine Oberfläche der Magnete 16 bzw. der Lamellen entsprechend ausgebildet sein, beispielsweise mit Noppen bzw. Rillen. Das Auseinanderschieben der Arme ist in Fig. 12c gezeigt. Beim Auseinanderschieben kann die Wirkung der Magnete 16 bzw. deren Normal- und/oder Haftkräfte durch eine Bestromung der Magnete 16 verstärkt werden. Um die Abdeckeinrichtung 17 wieder zu schließen, können die Magnete 16 durch eine Umkehrung der Bestromung wieder von den Lamellen der Abdeckeinrichtung 17 gelöst werden. Eine solche Öffnungseinrichtung 15 bzw. der gesamte Mechanismus zum selbsttätigen Öffnen und Verschließen einer Abdeckeinrichtung 17 oder dergleichen könnte auch unabhängig von der Ladevorrichtung 1 verwendet werden.

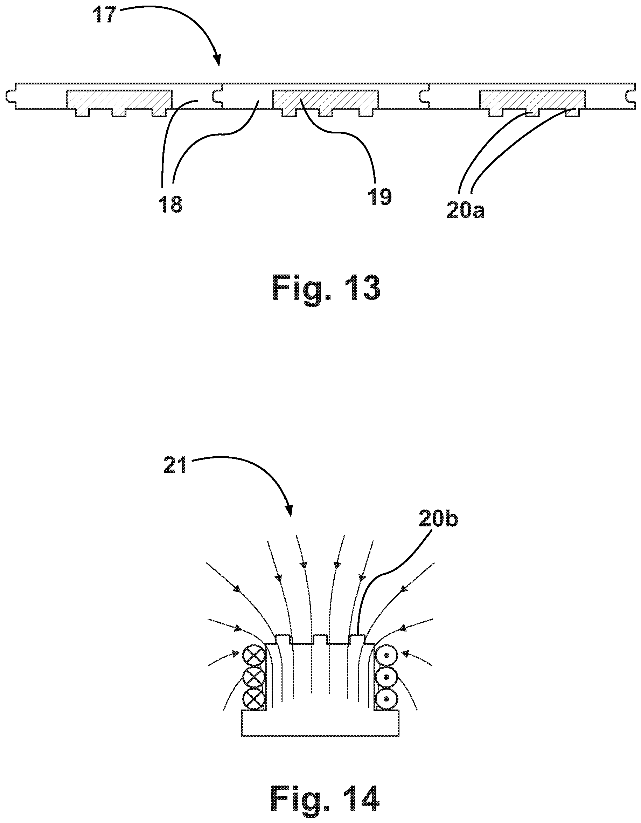

Fig. 13 zeigt einen Schnitt durch einen Ausschnitt einer Variante einer weiteren Abdeckeinrichtung 17, wobei einzelne Lamellen 18 lösbar miteinander verbunden sind. Innerhalb einer, zwei, drei oder mehr Lamellen 18 ist bevorzugt ein ferromagnetisches Material 19 angeordnet, wobei dieses sich mit beispielsweise drei Längsrippen 20a nach außen erstreckt und bevorzugt über eine gesamte Länge einer Lamelle 18 angeordnet ist. Besonders bevorzugt ist das ferromagnetische Material 19 etwa mittig einer jeweiligen Lamelle 18 angeordnet und umfasst etwa 50 % deren Breite. Ein beidseitig äußerer Rand der jeweiligen Lamelle 18 ist aus einem nicht ferromagnetischen Material ausgebildet, beispielsweise einem Kunststoff oder einem nicht ferromagnetischen Metall. Die lamellenartige Abdeckeinrichtung 17, bei welcher mehrere Lamellen 18 nebeneinander angeordnet sind, ist somit jeweils abwechselnd mit ferromagnetischen und nicht ferromagnetischen Bereichen ausgebildet, welche vorteilhaft jeweils gleich breit sind.

Um ein selbsttätiges Öffnen der Abdeckeinrichtung 17 und folglichendes Verbinden des Verbindungselementes 4 mit einem der Positionierelemente 3 der Kontaktierungsplatte 2 zu ermöglichen, ist an der Hebevorrichtung 11 wiederum eine nicht dargestellte Öffnungseinrichtung 15 angeordnet. Diese umfasst zumindest eine, bevorzugt zwei, Abdeckungen, unter welchen ein, zwei oder mehr Elektromagnete 21 angeordnet sind. Ein solcher Elektromagnet 21, welcher durch gezieltes Entfernen bzw. Manipulieren des äußeren Eisenkerns einen Feldverlauf ähnlich einem zylindrischen Permanentmagneten aufweist ist in Fig. 14 gezeigt und umfasst an einem äußeren Ende beispielsweise drei Längsrippen 20b. Weiter entspricht eine Breite bzw. ein Durchmesser des bevorzugt zylindrisch ausgebildeten Elektromagneten 21 einer Abmessung des ferromagnetischen Materials 19 einer Lamelle 18. Das Verbindungselement 4 ist bevorzugt unter den, insbesondere zwei, Elektromagneten 21 angeordnet. Vorzugsweise ist an einem oberen Ende der Hebevorrichtung 11 eine Einrichtung für eine seitliche Auslenkung der Abdeckungen mit dem jeweiligen Elektromagneten 21 angeordnet, beispielsweise ein Lineargleitelement, ein Linearschienensystem oder ein schwenkbarer Parallelmechanismus. Ist ein schwenkbarer Parallelmechanismus vorgesehen, kann an diesem, insbesondere oberhalb desselben, zusätzlich längs ein Lineargleitsystem, umfassend eine Schiene und einen Schlitten, angeordnet sein, wobei an der Schiene des Lineargleitsystems die Elektromagnete 21 angeordnet sind. Eine geeignete Mechanik (z. B. ein Scherenmechanismus) zwischen den Elektromagneten 21 und dem Lineargleitsystem bzw. dem schwenkbaren Parallelmechanismus sorgt dafür, dass diese durch Druck auf die Lamellen 18 der Abdeckeinrichtung 17 dieselben mechanisch auseinanderdrücken, sodass sich im geöffneten Bereich das Verbindungselement 4 auf der Zellenstruktur ausrichten kann. Hierbei muss das Verbindungselement 4 hauptsächlich in einer Längsrichtung verschoben werden, damit dieses in ein Positionierelement 3 einrastet. Durch entsprechend platzierte Federn ist ein automatisches Schließen der Abdeckeinrichtung 17 bzw. ein Rückstellen in einen Ausgangszustand möglich.

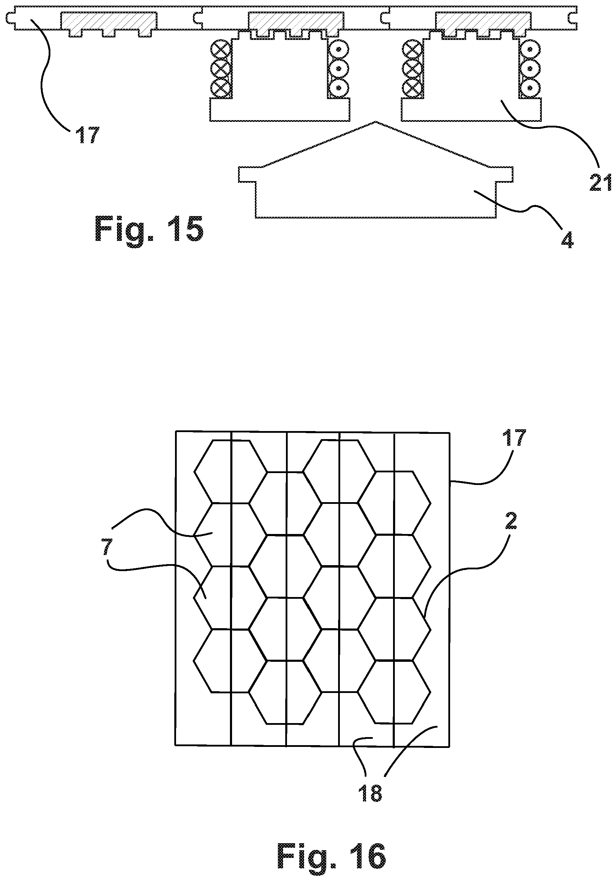

Bei einem Zusammenführen der Elektromagnete 21 mit den Lamellen 18 der Abdeckeinrichtung 17 ist es notwendig, darauf zu achten, dass die Elektromagnete 21 auf das ferromagnetische Material 19 der Lamellen und nicht auf den nicht ferromagnetischen Anteil der Abdeckeinrichtung 17 treffen. Ein solcher unerwünschter Fall könnte eintreten, wenn die Elektromagnete 21 unbestromt sind. Deshalb ist es zweckmäßig, die Elektromagnete 21 zu bestromen. Durch das dadurch entstehende Magnetfeld werden die Elektromagnete 21 aufgrund der Anziehung des ferromagnetischen Materials 19 der Lamellen 18 so ausgerichtet bzw. abgelenkt, dass die Elektromagnete 21 zumindest teilweise überlappend bzw. mittig mit dem ferromagnetischen Material 19 der Lamellen 18 ausgerichtet sind. Dies ist in Fig. 15 gezeigt. Hierzu ist es notwendig, dass sich die Elektromagnete 21 gemeinsam mit dem Verbindungselement 4 auslenken lassen.

Sind die bestromten bzw. kurzzeitig sogar übersteuerten Elektromagnete 21 mit dem ferromagnetischen Material 19 der Lamellen 18 in Verbindung, ist das Verbindungselement 4 etwa mittig an einer Stelle ausgerichtet, an welcher zwei Lamellen 18 aufeinandertreffen, wie in Fig. 15 ersichtlich. Fig. 16 zeigt eine schematische Darstellung einer Kontaktierungsplatte 2 mit einer Abdeckeinrichtung 17. Es ist ersichtlich, dass eine Breite der Lamellen 18 in Bezug auf die hexagonale Zellenstruktur der Kontaktierungsplatte insbesondere einem Abstand zwischen den Mittelpunkten zweier benachbarter, schräg versetzter, hexagonalen Zellen 7 entspricht. Soll die Abdeckeinrichtung 17 nun zwischen diesen beiden Lamellen 18 geöffnet werden, werden diese beiden und somit auch die restlichen Lamellen 18 beidseitig des Verbindungselementes 4 verschoben, insbesondere um etwas mehr als eine halbe Lamellenbreite. Die Verschiebung der Lamellen 18 ist vorzugsweise auf beiden Seiten durch einen Anschlag begrenzt. Dadurch ist das Verbindungselement 4 seitlich bereits grob auf der hexagonalen Zellenstruktur der Kontaktierungsplatte 2 ausgerichtet; zum formschlüssigen Einrasten des Verbindungselementes 4 in ein Positionierelement 3 ist somit nur mehr eine Verschiebung desselben in einer Längsrichtung notwendig. Dies ist in Fig. 16 ersichtlich.

Damit die Elektromagnete 21 eine Feldverteilung aufweisen, welche eine seitliche Anziehung eines ferromagnetischen Materials 19 begünstigen, ist es vorteilhaft, wenn die Elektromagnete 21 so ausgebildet sind, dass diese ein Verhalten bzw. einen Feldverlauf ähnlich einem zylindrischen Permanentmagneten aufweisen. Hierzu kann es günstig sein, Elektromagnete 21 ohne einen äußeren Eisenkern auszubilden.

Darüber hinaus kann es zweckmäßig sein, eine gesamte Steuerelektronik und Schutztechnik der Ladevorrichtung 1 und Hebevorrichtung 11 in einer sogenannten Wallbox anzuordnen. Diese kann beispielsweise die Abmessungen 20 cm mal 30 cm mal 8 cm aufweisen und zumindest einen Taster oder ein ähnliches Interaktionselement umfassen. Auf einer Vorderseite ist z. B. ein LED-Ring angeordnet, welcher beispielsweise einen Durchmesser von etwa 16 cm aufweist und aus z. B. 60 Tri-Color-LEDs besteht. Durch eine Animation der einzelnen LEDs (beispielsweise Blinken, Lauflicht, Farbwechsel, Helligkeitswechsel und/oder dergleichen) wird ein Benutzer über einen aktuellen Status (Stand-by, bereit zum Laden, es wird geladen, Ladezyklus abgeschlossen, ein Fehler ist aufgetreten und/oder dergleichen) informiert. Wird beispielsweise gerade geladen und das Elektrofahrzeug soll in Betrieb genommen werden, genügt z. B. ein Druck auf den Taster, um das Laden zu beenden, wobei die Hebevorrichtung 11 dann manuell ausgelöst automatisiert einfährt. Weiter ist es durch z. B. drei- oder mehrsekündiges Drücken des Tasters möglich, in einen Stromstärkeprogrammiermodus zu gelangen, um eine Stromstärke bzw. eine Ladeleistung einzustellen bzw. zu ändern bzw. anzupassen. Hierbei kann durch mehrmaliges Drücken inkrementell die Stromstärke erhöht werden, welche z. B. durch unterschiedlich viele leuchtende LEDs optisch im Ring angezeigt wird. Ist eine maximale Stromstärke erreicht, kann durch nochmaliges Betätigen des Tasters wieder auf die niedrigste Stufe gewechselt werden. Wird beispielsweise fünf, sieben oder mehr Sekunden lang keine Taste gedrückt, kann vorgesehen sein, dass der Stromstärkeprogrammiermodus automatisch endet.

Zusätzlich kann durch den LED-Ring auch eine Position des Fahrzeuges (richtig bzw. falsch) optisch angezeigt werden, oder durch ein Positionsbestimmungssystem während des Einparkens eines Fahrzeuges durch Animationen bzw. blinkende Pfeile, eine Fahrrichtung signalisiert werden, damit sich die Kontaktierungsplatte 2 innerhalb des Toleranzbereiches für eine automatische Verbindung befindet. Des Weiteren sind durch diesen LED-Ring auch weitere Parameter bzw. Betriebszustände anzeigbar.
Ferner kann es vorgesehen sein, dass in der Wallbox auch eine drahtlose Verbindung angeordnet ist, wie z. B. Bluetooth, um mit einem Smartphone oder dergleichen eine Verbindung herzustellen. Über das Smartphone sind sämtliche Parameter auslesbar und Parameter wie z. B. Ladebeginn oder Ladeleistung einstellbar. Alternativ oder zusätzlich dazu kann die Wallbox auch direkt mit dem Internet verbunden sein oder es kann eine Verbindung mit einem Energieversorgungsunternehmen vorgesehen sein, um auf z. B. eine Auslastung des Stromnetzes zu berücksichtigen. Ferner kann die Wallbox mit einem Energiespeicher ausgestattet sein, um im Falle eines Stromausfalles ein selbstständiges Einfahren der Hebevorrichtung 11 zu ermöglichen.

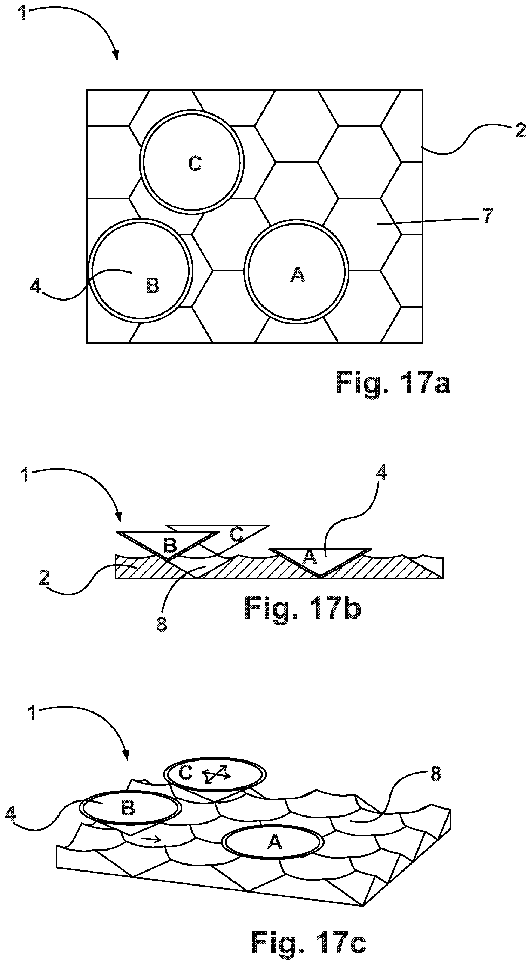

Bei einem erfindungsgemäßen Verfahren wird das Verbindungselement 4 mit der Kontaktierungsplatte 2 zusammengeführt, wie dies anhand der Fig. 17a bis 17c erläutert ist. Die Kontaktierungsplatte 2 ist dabei so ausgebildet, dass das Verbindungselement 4 bei einem Kontakt mit dieser selbsttätig und nachgiebig in eines der Positionierelemente 3 eingerastet wird. Dies erfolgt mit Vorteil unabhängig von einer Position des Verbindungselementes 4 an der Kontaktierungsplatte 2. In Fig. 17a bis 17c sind drei mögliche Positionen bzw. Fälle A, B, C eines Auftreffens des Verbindungselementes 4 auf der Kontaktierungsplatte 2 gezeigt. Ein erster, optimaler Fall A ist das direkte Auftreffen in eines der Positionierelemente 3. Dabei werden keine weiteren Schritte durchgeführt, da vom Verbindungselement 4 bereits eine der gewünschten Endpositionen eingenommen wurde. Bei einem zweiten Fall B trifft das Verbindungselement 4, welches in Fig. 17a bis 17c als Konus ausgeführt ist, an einer Kante einer sechseckigen Zelle 7 auf, wonach dieses abrutscht und somit wiederum eine Endposition eingenommen wird. Ein dritter Fall C tritt ein, wenn das Verbindungselement 4 zu einem Punkt gebracht wird, an welchem drei Zellen 7 aufeinandertreffen. Die Ladevorrichtung 1 ist jedoch so ausgebildet, dass das Verbindungselement 4 auch bei einem Auftreffen in einer solchen Position auf der Kontaktierungsplatte 2 in eines der angrenzenden Positionierelemente 3 abrutscht. Mögliche Abrutschrichtungen der jeweiligen Konusse sind in Fig. 17c durch Pfeile dargestellt. Vom Verbindungselement 4 wird also immer eine diskrete Position in einem der Positionierelemente 3 eingenommen, unabhängig davon, wie dieses auf die Kontaktierungsplatte 2 auftrifft. Bei einem erfindungsgemäßen Verfahren wird das Verbindungselement 4 orthogonal (in z-Richtung) zur als Kontaktierungsplatte 2 aufgespannten Struktur aus Zellen 7 bewegt und seitlich (in x- und y-Richtung) um einen Umkreisradius der Zellen 7 ausgelenkt.

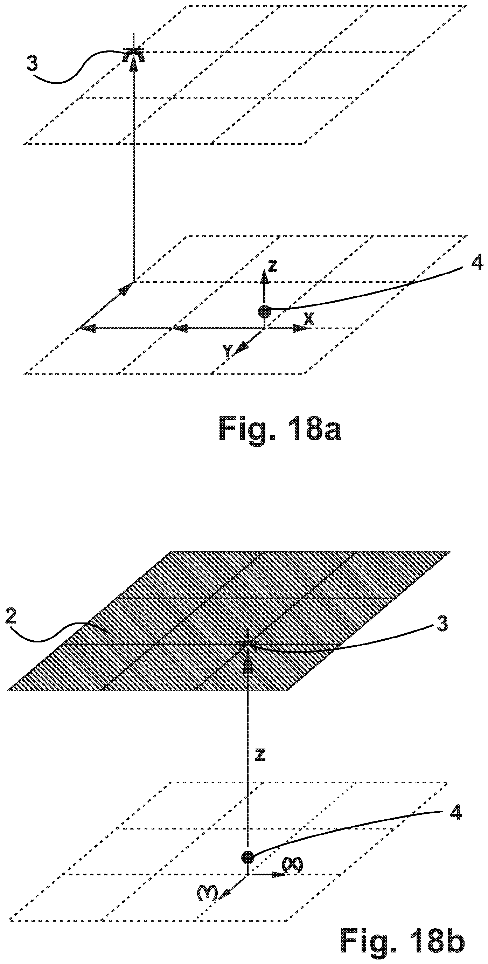

In Fig. 18a und Fig. 18b ist eine räumlich versetzte dreiachsige Positionierung zum Verbinden des Verbindungselementes 4 mit der Kontaktierungsplatte 2 bzw. einem Positionierelement 3 im Vergleich zu einem erfindungsgemäßen Verfahren mit einer einachsigen Positionierung schematisch gezeigt. In Fig. 18a, welche den Stand der Technik darstellt, wird in einem ersten Schritt eine Ist-Position und eine Soll-Position erfasst, beispielsweise mit einer Kamera oder dergleichen. In einem zweiten Schritt wird durch eine mindestens dreiachsige Positionierung eine Verbindung hergestellt. Diese dreiachsige Positionierung wird beispielsweise mit einem Roboterarm realisiert. Ein solcher Roboterarm ist kompliziert, aufwendig und teuer zum Realisieren. Zudem kommt bei der Realisierung die unterschiedliche Anordnung eines Positionierelementes 3 bei Elektrofahrzeugen bzw. Plug-in-Hybridfahrzeugen aus dem Stand der Technik erschwerend hinzu.

Fig. 18b zeigt im Gegensatz dazu eine Positionierung eines Verbindungselementes 4 gemäß dem erfindungsgemäßen Verfahren. Dabei wird das Verbindungselement 4 mit einem beliebigen Punkt bzw. Positionierelementes 3 auf der Kontaktierungsplatte 2 verbunden. Dadurch wird der Bewegungsablauf im Vergleich mit einem solchen aus Fig. 18a auf eine Achse reduziert, da zum Verbinden nur eine Bewegung in z-Richtung notwendig ist. Zudem ist keine Positionserfassung erforderlich.

## Patentansprüche

1. Ladevorrichtung, insbesondere (1) für ein Fahrzeug (F), wobei eine Kontaktierungsplatte (2) mit einer Vielzahl von Positionierelementen (3) ausgebildet ist und zumindest ein Verbindungselement (4) zur Stromübertragung vorgesehen ist, wobei das Verbindungselement (4) bei einem Zusammenführen mit der Kontaktierungsplatte (2) positionsunabhängig und nachgiebig in eines der Positionierelemente (3) einrastet und die Kontaktierungsplatte (2) mehrschichtig aufgebaut ist, wobei in einem Durchschnitt durch diese abwechselnd zumindest eine Isolierschicht (5) und zumindest eine Kontaktschicht (6) vorgesehen sind, **dadurch gekennzeichnet, dass** innerhalb des Verbindungselementes (4) zumindest ein Kontaktkörper (10) angeordnet ist, welcher bei Krafteinwirkung teilweise aus dem Verbindungselement (4) bringbar ist, um sich mit der Kontaktschicht (6) eines Positionierelementes (3) zu verbinden, wobei ein Kontaktbereich in der Kontaktierungsplatte (2) angeordnet ist.

2. Ladevorrichtung (1) nach Anspruch 1, **dadurch gekennzeichnet, dass** die Kontaktierungsplatte (2) eine Vielzahl von, in einer Draufsicht bevorzugt mehreckigen, insbesondere hexagonalen, Zellen (7) mit jeweils einem Positionierelement (3) umfasst.

3. Ladevorrichtung (1) nach Anspruch 1 oder 2, **dadurch gekennzeichnet, dass** jede Zelle (7) insbesondere koaxiale Ausnehmungen (8) mit einer Spitze in einem Mittelpunkt der Zelle (7) aufweist.

4. Ladevorrichtung (1) nach Anspruch 3, **dadurch gekennzeichnet, dass** jede konusförmige Ausnehmung (8) zumindest eine hohlzylindrische, koaxiale Aussparung (9) umfasst.

5. Ladevorrichtung (1) nach einem der Ansprüche 1 bis 4, **dadurch gekennzeichnet, dass** das Verbindungselement (4) in jedem der Positionierelemente (3) positionierbar ist, wobei das Verbindungselement (4) insbesondere konisch mit einer stumpfen Spitze ausgebildet ist.

6. Ladevorrichtung (1) nach einem der Ansprüche 1 bis 5, **dadurch gekennzeichnet, dass** das Verbindungselement (4) an einer Hebevorrichtung (11) angeordnet ist.

7. Ladevorrichtung (1) nach Anspruch 6, **dadurch gekennzeichnet, dass** die Hebevorrichtung (11) selbsttätig verfahrbar ist.

8. Verwendung einer Ladevorrichtung (1) nach einem der Ansprüche 1 bis 7 zum autonomen Laden einer Speichereinheit für elektrische Energie in einem Fahrzeug (F).

9. Elektrofahrzeug mit einer Ladevorrichtung (1) nach einem der Ansprüche 1 bis 7, **dadurch gekennzeichnet, dass** eine Kontaktierungsplatte (2) mit einer Vielzahl von Positionierelementen (3) insbesondere bodenseitig am Elektrofahrzeug angeordnet ist und zumindest ein Verbindungselement (4) zur Stromübertragung vorgesehen ist, welches beim Zusammenführen mit der Kontaktierungsplatte (2) positionsunabhängig und nachgiebig in eines der Positionierelemente (3) einrastet.

10. Verfahren zum Laden, insbesondere eines Fahrzeuges (F), insbesondere unter Verwendung einer Ladevorrichtung (1) nach einem der Ansprüche 1 bis 7, wobei zumindest ein Verbindungselement (4) zur Stromübertragung mit einer Kontaktierungsplatte (2), welche mehrschichtig aufgebaut ist, wobei in einem Durchschnitt durch diese abwechselnd zumindest eine Isolierschicht (5) und zumindest eine Kontaktschicht (6) vorgesehen sind, zusammengeführt wird, wobei das Verbindungselement (4) bei einem Kontakt mit der Kontaktierungsplatte (2) positionsunabhängig und nachgiebig in eines von einer Vielzahl von an dieser angeordneten Positionierelementen (3) eingerastet wird, **dadurch gekennzeichnet, dass** innerhalb des Verbindungselementes (4) zumindest ein Kontaktkörper (10) angeordnet ist, welcher bei Krafteinwirkung teilweise aus dem Verbindungselement (4) gebracht wird, um sich mit der Kontaktschicht (6) eines Positionierelementes (3) zu verbinden, wobei ein Kontaktbereich in der Kontaktierungsplatte (2) angeordnet ist.

11. Verfahren nach Anspruch 10, **dadurch gekennzeichnet, dass** zumindest ein innerhalb des Verbindungselementes (4) angeordneter Kontaktkörper (10) bei formschlüssigem Kontakt des Verbindungselementes (4) mit einem Positionierelement (3) in einen in einer koaxialen Aussparung (9) des Positionierelementes (3) angeordneten Teil einer Kontaktschicht (6) gedrückt und kraftschlüssig lösbar verbunden wird.

12. Verfahren nach Anspruch 10 oder 11, **dadurch gekennzeichnet, dass** bei einer Einnahme einer vorbestimmten Position eines Fahrzeuges (F) mit der Kontaktierungsplatte (2) das Verbindungselement (4) mit einer Hebevorrichtung (11) selbsttätig zur Kontaktierungsplatte (2) bewegt wird.

13. Verfahren nach einem der Ansprüche 10 bis 12, **dadurch gekennzeichnet, dass** bei vollständigem Kontakt des Kontaktkörpers (10) des Verbindungselementes (4) mit der Kontaktschicht (6) des Positionierelementes (3) und nach einer selbsttätigen kraftschlüssigen Verbindung des Positionierelementes (3) mit dem Verbindungselement (4) eine Speichereinheit im Fahrzeug (F) geladen wird.

14. Verfahren nach Anspruch 13, **dadurch gekennzeichnet, dass** nach einem abgeschlossenen Ladezyklus die kraftschlüssige Verbindung selbsttätig gelöst und das Verbindungselement (4) mit der Hebevorrichtung (11) in eine Ausgangsposition verfahren wird.

## Claims

1. Charging device (1), in particular, for a vehicle (F), wherein a contact plate (2) is formed with a plurality of positioning elements (3) and at least one connecting element (4) is provided for power transmission, wherein the connecting element (4) engages into one of the positioning elements (3) in a position-independent and flexible manner when merging with the contact plate (2), and the contact plate (2) is constructed in a multi-layered manner, wherein at least one isolation layer (5) and at least one contact layer (6) are provided intersecting through this in an alternating manner, **characterized in that**, within the connecting element (4), at least one contact body (10) is arranged, which can partially brought out of the connecting element (4) upon the exertion of force in order to connect to the contact layer (6) of a positioning element (3), wherein a contact area is arranged in the contact plate (2).

2. Charging device (1) according to claim 1, **characterized in that** the contact plate (2) comprises a plurality of cells (7) that are preferably polygonal in a top view, in particular, being hexagonal, each comprising a positioning element (3).

3. Charging device (1) according to claim 1 or 2, **characterized in that**, in particular, each cell (7) has coaxial recesses (8) with a tip located at a centre point of the cell (7).

4. Charging device (1) according to claim 3, **characterized in that** each conical recess (8) comprises at least one hollow cylindrical coaxial recess (9).

5. Charging device (1) according to any one of claims 1 to 4, **characterized in that** the connecting element (4) can be positioned in each of the positioning elements (3), wherein the connecting element (4) is formed, in particular, in a conical manner with a blunt tip.

6. Charging device (1) according to any one of claims 1 to 5, **characterized in that** the connecting element (4) is arranged on a lifting device (11).

7. Charging device (1) according to claim 6, **characterized in that** the lifting device (11) can be moved automatically.

8. Use of a charging device (1) according to any one of claims 1 to 7 for the autonomous charging of a storage unit for electrical energy in a vehicle (F).

9. Electric vehicle with a charging device (1) according to any one of claims 1 to 7, **characterized in that** a contact plate (2) with a plurality of positioning elements (3) is arranged, in particular, on the ground side of the electric vehicle, and at least one connecting element (4) is provided for power transmission, which engages into one of the positioning elements (3) when merging with the contact plate (2) in a position-independent and flexible manner.

10. Method for charging, in particular, a vehicle (F), particularly using a charging device (1) according to any one of claims 1 to 7, wherein at least one connecting element (4) for the power transmission is merged with a contact plate (2), which is constructed in a multi-layered manner, wherein at least one insulation layer (5) and at least one contact layer (6) are provided intersecting through this in an alternating manner, wherein the connecting element (4) is engaged into one of a plurality of positioning elements (3) arranged on this in a position-independent and flexible manner upon making contact with the contact plate (2), **characterized in that**, within the connecting element (4), at least one contact body (10) is arranged, which is partially brought out of the connecting element (4) upon the exertion of force in order to connect to the contact layer (6) of a positioning element (3), wherein a contact area is arranged in the contact plate (2).

11. Method according to claim 10, **characterized in that** at least one contact body (10) arranged within the connecting element (4) is pressed into a part of a contact layer (6) arranged in a coaxial recess (9) of the positioning element (3) upon establishing a force-locking contact of the connecting element (4) with a positioning element (3) and is detachably connected in a force-fitting manner.

12. Method according to claim 10 or 11, **characterized in that**, when assuming a predetermined position of a vehicle (F) with the contact plate (2), the connecting element (4) is automatically moved towards the contacting plate (2) via a lifting device (11).

13. Method according to any one of claims 10 to 12, **characterized in that**, upon the contact body (10) of the connecting element (4) making full contact with the contact layer (6) of the positioning element (3) and after an automatic force-locking connection of the positioning element (3) to the connecting element (4), a storage unit in the vehicle (F) is charged.

14. Method according to claim 13, **characterized in that**, after a completed charging cycle, the force-locking connection is automatically detached and the connecting element (4) is moved into a starting position via the lifting device (11).

## Revendications

1. Dispositif de chargement, en particulier (1) pour un véhicule (F), sachant qu'une plaque de contact (2) est constituée avec une pluralité d'éléments de positionnement (3) et qu'au moins un élément de liaison (4) est prévu pour la transmission de courant, sachant que l'élément de liaison (4) s'enclenche lors d'un assemblage avec la plaque de contact (2) indépendamment de la position et de façon flexible dans un des éléments de positionnement (3) et la plaque de contact (2) est constituée en plusieurs couches, sachant qu'en moyenne au moins une couche isolante (5) et au moins une couche de contact (6) sont prévues en alternance avec celles-ci, **caractérisé en ce qu'**à l'intérieur de l'élément de liaison (4) au minimum un corps de contact (10) est disposé, lequel peut être placé par effet de force en partie en dehors de l'élément de liaison (4) pour se relier à la couche de contact (6) d'un élément de positionnement (3), sachant qu'une zone de contact est disposée dans la plaque de contact (2).

2. Dispositif de chargement (1) selon la revendication 1, **caractérisé en ce que** la plaque de contact (2) comprend une pluralité de cellules (7) de préférence polygonales en vue de dessus, en particulier hexagonales avec respectivement un élément de positionnement (3).

3. Dispositif de chargement (1) selon la revendication 1 ou 2, **caractérisé en ce que** chaque cellule (7) comporte en particulier des évidements coaxiaux (8) avec une pointe dans un centre de la cellule (7).

4. Dispositif de chargement (1) selon la revendication 3, **caractérisé en ce que** chaque évidement conique (8) comprend au moins une cavité cylindrique creuse, coaxiale (9).

5. Dispositif de chargement (1) selon l'une quelconque des revendications 1 à 4 **caractérisé en ce que** l'élément de liaison (4) peut être positionné dans chacun des éléments de positionnement (3), sachant que l'élément de liaison (4) est constitué en particulier de façon conique avec une pointe tronquée.

6. Dispositif de chargement (1) selon l'une quelconque des revendications 1 à 5, **caractérisé en ce que** l'élément de liaison (4) est disposé dans un dispositif de levage (11).

7. Dispositif de chargement (1) selon la revendication 6 **caractérisé en ce que** le dispositif de levage (11) peut être déplacé automatiquement.

8. Utilisation d'un dispositif de ce chargement (1) selon l'une quelconque des revendications 1 à 7 pour le chargement autonome d'une unité d'accumulation pour l'énergie électrique dans un véhicule (F).

9. Véhicule électrique avec un dispositif de chargement (1) selon l'une quelconque des revendications 1 à 7, **caractérisé en ce qu'**une plaque de contact (2) avec une pluralité d'éléments de positionnement (3) est disposée en particulier côté fond sur le véhicule électrique et au moins un élément de liaison (4) est prévu pour la transmission de courant, lequel s'enclenche lors d'un assemblage avec la plaque de contact (2) indépendamment de la position et de façon flexible dans un des éléments de positionnement (3).

10. Procédé de chargement, en particulier d'un véhicule (F), en particulier en utilisant un dispositif de chargement (1) selon l'une quelconque des revendications 1 à 7, sachant qu'au moins un élément de liaison (4) est assemblé à une plaque de contact (2), laquelle est constituée en plusieurs couches, sachant qu'en moyenne au moins une couche isolante (5) et au moins une couche de contact (6) sont prévues en alternance avec celles-ci, sachant que l'élément de liaison (4) est enclenché lors d'un contact avec la plaque de contact (2) indépendamment de la position et de façon flexible dans un élément d'une pluralité d'éléments de positionnement (3) disposés sur celle-ci, **caractérisé en ce qu'**à l'intérieur de l'élément de liaison (4) est disposé au moins un corps de contact (10), lequel est placé en partie hors de l'élément de liaison (4) par effet de force pour se relier à la couche de contact (6) d'un élément de positionnement (3), sachant qu'une zone de contact est disposée dans la plaque de contact (2).

11. Procédé selon la revendication 10, **caractérisé en ce qu'**au moins un corps de contact (10) disposé à l'intérieur de l'élément de liaison (4) est appuyé lors du contact par conformité de forme de l'élément de liaison (4) et est relié de façon détachable par conformité de force avec un élément de positionnement (3) dans une partie d'une couche de contact (6), disposée dans une cavité coaxiale (9) de l'élément de positionnement (3).

12. Procédé selon la revendication 10 ou 11, **caractérisé en ce qu'**en adoptant une position prédéterminée d'un véhicule (F) avec la plaque de contact (2), l'élément de liaison (4) est déplacé automatiquement avec un dispositif de levage (11) vers la plaque de contact (2).

13. Procédé selon l'une quelconque des revendications 10 à 12, **caractérisé en ce que** lors d'un contact complet du corps de contact (10) de l'élément de liaison (4) avec la couche de contact (6) de l'élément de positionnement (3) et après une liaison automatique par conformité de force de l'élément de positionnement (3) avec l'élément de liaison (4), une unité d'accumulation est chargée dans le véhicule (F).

14. Procédé selon la revendication 13, **caractérisé en ce que** la liaison par conformité de force est défaite automatiquement après un cycle de charge écoulé et l'élément de liaison (4) est déplacé avec le dispositif de levage (11) dans une position de sortie.
